(19) Europäisches Patentamt
European Patent Office
Office européen des brevets

(11) **EP 1 033 883 A1**

(12) **EUROPEAN PATENT APPLICATION**
published in accordance with Art. 158(3) EPC

(43) Date of publication:
06.09.2000 Bulletin 2000/36

(51) Int. Cl.⁷: **H04N 7/30**

(21) Application number: **99943410.3**

(86) International application number:
**PCT/JP99/05101**

(22) Date of filing: **20.09.1999**

(87) International publication number:
**WO 00/18129 (30.03.2000 Gazette 2000/13)**

(84) Designated Contracting States:
**AT BE CH CY DE DK ES FI FR GB GR IE IT LI LU MC NL PT SE**
Designated Extension States:
**AL LT LV MK RO SI**

(30) Priority: **22.09.1998 JP 26847898**
**08.12.1998 JP 34807698**

(71) Applicant:
**MATSUSHITA ELECTRIC INDUSTRIAL CO., LTD.**
**Kadoma-shi, Osaka 571-8501 (JP)**

(72) Inventors:
• **FUJIWARA, Yuji**
**Nishinomiya -shi, Hyogo 662-0872 (JP)**
• **NISHINO, Masakazu**
**Kashiwara-shi, Osaka 582-0007 (JP)**
• **MIYASHITA, Mitsuhiro**
**Nishinomiya-shi, Hyogo 663-8032 (JP)**
• **WAKE, Kazuhiro**
**Moriguchi-shi, Osaka 570-0054 (JP)**

(74) Representative:
**Grünecker, Kinkeldey,**
**Stockmair & Schwanhäusser**
**Anwaltssozietät**
**Maximilianstrasse 58**
**80538 München (DE)**

(54) **VIDEO SIGNAL ENCODING METHOD, VIDEO SIGNAL ENCODER, AND PROGRAM RECORDED MEDIUM**

(57)  When a digital video signal is compressed by a given method and the compressed signal is transformed to a video signal of another compression method, the code amount of the transformed video signal sometimes exceeds the capacity of a transmission channel. Therefore, an input digital video signal is discrete cosine transformed. A quantizer is selected which enables both code amounts that are obtained by applying first and second variable length codings on AC components of the discrete cosine transformed digital video signal, to be equal to or smaller than a differential code amount that is obtained by subtracting, from a predetermined code amount, a maximum additional information amount which is a larger one of information amounts of first and second additional information, and a maximum DC code amount which is a larger one of a predictive code amount which is obtained by performing difference predictive coding on DC components of the discrete cosine transformed input digital video signal, and a fixed code amount in the case where the DC components are set to a fixed length. The AC components of the discrete cosine transformed digital video signal are quantized by the selected quantizer, and DC components and the first additional information are added to produce a first bit stream.

Fig. 1

EP 1 033 883 A1

## Description

Technical Field

The present invention relates to a video signal coding method which codes a video signal, a video signal coding apparatus, and a program recording medium.

Background Art

Recently, digitization of the environment of a video signal is rapidly advancing. For example, apparatuses for handling a digital video signal come into widespread use, and a digital broadcast is to be started. However, digitization of a digital video signal involves compression of the video signal, and hence there arise a problem due to a mixture of plural compression systems, and another problem in that the image quality is lowered as a result of compression of the video signal.

First, the problem due to a mixture of plural compression systems will be described. For example, a case will be considered in which a video signal is recorded on a VTR by using DVCPRO compression, and the recorded video signal on the VTR is transmitted by using MPEG2 compression. The two compression systems are different from each other in detail portion of compression. In order to transform a DVCPRO compressed bit stream to a MPEG2 bit stream, therefore, it is necessary that the DVCPRO compressed bit stream is once expanded and the decoded bit stream is then applied MPEG2 compression. As a result, the video signal is twice compressed, so that the image quality is lowered in the transmission.

In order to prevent such image quality degradation from occurring, a compression system has been studied in which a DVCPRO compressed bit stream can be transformed to a MPEG2 bit stream by bit stream transformation only. When this compression system is realized, the above-mentioned image quality degradation can be prevented from occurring. However, the two systems are different from each other in compression method of VLC code and DC, Syntax, and the like, and hence the total code amount of transformed bit streams may be sometimes increased. As a result, there arises a problem in that the upper limit of the total code amount of transformed bit streams cannot be guaranteed.

On the other hand, image quality degradation due to compression of a video signal will be described. In general, an image quality is affected by the bit rate and the definition of an image. The definition of an image indicates the statistical property of the image. In an image of a fine pattern or complex motion, and an image of a high noise level, the definition is high. In order to improve the image quality while maintaining the bit rate constant, a method is well known in which band limitation is performed by a filter to make the definition of an image smaller. The band limitation by a filter is performed on an input image, or on a motion-compensated difference image.

In the band limitation which is performed on an input image by a filter, a filter process is always conducted irrespective of the picture type of the input image. Therefore, there is a problem in that, with respect to a still image of a very high frame definition, for example, an image which is obtained by processing the image results in an obscure image which has applied band limitation, although the code amount is sufficiently large. The band limitation which is performed on a motion-compensated difference image by a filter is controlled only on the basis of the definition of the difference image. Consequently, there is a problem in that it is impossible to correctly decide whether a region is an edge region which is visually important or a highly random region which is not visually important.

Disclosure of Invention

It is an object of the invention to provide a video signal coding method which codes a bit stream before transformation so that the code amount of the transformed bit stream can be set within a predetermined code amount, and also an apparatus for the same.

It is an object of the invention to provide a video signal coding apparatus in which a band limiting filter is adaptively used, thereby improving the image quality.

A first invention of the present invention (corresponding to claim 1) is a video signal coding method in which an input digital video signal is coded by using discrete cosine transform, quantization, and variable length coding, characterized in that

in the quantization, quantization is performed while selecting a quantizer which enables N kinds (N ≥ 2) of code amounts to be equal to or smaller than a predetermined code amount, the code amounts being obtained by applying N kinds of variable length codings on the discrete cosine transformed input digital video signal.

According to the method, quantization can be performed while selecting a quantizer which, even when any one of the systems is used, enables the code amount of AC components that are dominant with respect to the code amount in a bit stream, to become a specified code amount, and the objects can be attained.

A second invention of the present invention (corresponding to claim 2) is a video signal coding apparatus characterized in that said apparatus comprises:

orthogonal transforming means for performing discrete cosine transform on an input digital video signal to produce a transformed signal;

quantization estimating means for selecting a quantizer which enables N kinds (N ≥ 2) of code amounts to be equal to or smaller than a predetermined code amount, the code amounts being obtained by applying quantization and N kinds of variable length codings on the transformed signal;

quantizing means for quantizing the transformed signal to produce a quantized signal, by using said quantizer which is selected by said quantization estimating means; and

variable length coding manes for applying one of the N kinds of variable length codings which are used in said quantization estimating means, on the quantized signal.

According to this configuration, quantization can be performed while selecting a quantizer which, even when any one of the systems is used, enables the code amount of AC components that are dominant with respect to the code amount in a bit stream, to become a specified code amount, and the objects can be attained.

A third invention of the present invention (corresponding to claim 3) is a video signal coding apparatus according to the 2nd invention of the present invention, characterized in that the input digital video signal is a video signal which is previously divided into predetermined coding units, and

said quantization estimating means selects a quantizer for each of the coding units.

A fourth invention of the present invention (corresponding to claim 4) is a video signal coding method in which an input digital video signal is coded by using discrete cosine transform, quantization, and first variable length coding, to produce a first bit stream that can be transformed to a second bit stream by using decoding of the first variable length coding, difference predictive coding, and second variable length coding, characterized in that

in the quantization, quantization is performed while selecting a quantizer which enables both code amounts that are obtained by applying the first and second variable length codings on AC components of the discrete cosine transformed input digital video signal, to be equal to or smaller than a differential code amount that is obtained by subtracting, from a predetermined code amount, a maximum DC code amount which is a larger one among a predictive code amount which is obtained by performing difference predictive coding on DC components of the discrete cosine transformed input digital video signal, and a fixed code amount in the case where the DC components are set to a fixed length.

A fifth invention of the present invention (corresponding to claim 5) is a video signal coding method in which an input digital video signal is coded by using discrete cosine transform, difference predictive coding, quantization, and first variable length coding, to produce a first bit stream that can be transformed to a second bit stream by using decoding of the first variable length coding, decoding of the difference predictive coding, and second variable length coding, characterized in that

in the quantization, quantization is performed while selecting a quantizer which enables both code amounts that are obtained by applying the first and second variable length codings on AC components of the discrete cosine transformed input digital video signal, to be equal to or smaller than a differential code amount that is obtained by subtracting, from a predetermined code amount, a maximum DC code amount which is a larger one among a predictive code amount which is obtained by performing difference predictive coding on DC components of the discrete cosine transformed input digital video signal, and a fixed code amount in the case where the DC components are set to a fixed length.

A sixth invention of the present invention (corresponding to claim 6) is a video signal coding apparatus characterized in that said apparatus comprises:

orthogonal transforming means for performing discrete cosine transform on an input digital video signal to produce a transformed signal;

code amount estimating means for setting a larger one among a difference predictive code amount which is obtained by performing difference predictive coding on DC components of the discrete cosine transformed input digital video signal, and a fixed code amount in the case where the DC components are set to a fixed length, as a DC estimated code amount;

quantization estimating means for selecting a quantizer which enables N kinds (N ≥ 2) of code amounts to be equal to or smaller than a differential code amount which is obtained by subtracting the DC estimated code amount from a predetermined code amount, the code amounts being obtained by applying quantization and N kinds of variable length codings on AC components of the transformed signal;

quantizing means for quantizing the AC components of the transformed signal to produce a quantized signal, by using said quantizer which is selected by said quantization estimating means; and

variable length coding manes for applying one of the N kinds of variable length codings which are used in said quantization estimating means, on the quantized signal.

A seventh invention of the present invention (corresponding to claim 7) is a video signal coding apparatus characterized in that said apparatus comprises:

orthogonal transforming means for performing discrete cosine transform on an input digital video signal to produce a transformed signal;

predictive differential coding means for performing predictive differential coding on DC components of the discrete cosine transformed input digital video signal, and setting a code amount produced in the predictive differential coding, as a difference predictive code amount;

code amount estimating means for setting a larger one among the difference predictive code amount, and a fixed code amount in the case where the DC components are set to a fixed length, as a DC estimated code amount;

quantization estimating means for selecting a quantizer which enables N kinds (N ≥ 2) of code amounts to be equal to or smaller than a differential code amount which is obtained by subtracting the DC estimated code amount from a predetermined code amount, the code amounts being obtained by applying quantization and N kinds of variable length codings on AC components of the transformed signal;

quantizing means for quantizing the AC components of the transformed signal to produce a quantized signal, by using said quantizer which is selected by said quantization estimating means; and

variable length coding manes for applying one of the N kinds of variable length codings which are used in said quantization estimating means, on the quantized signal.

A eighth invention of the present invention (corresponding to claim 8) is a video signal coding apparatus characterized in that said apparatus comprises:

code amount estimating means for, for each of predetermined blocks of an input digital video signal, obtaining an average value of pixels in the block, setting the average value as a value of DC components which are obtained by performing discrete cosine transform on the digital video signal, and setting a larger one among a difference predictive code amount which is obtained by performing difference predictive coding on the DC components, and a fixed code amount in the case where the DC components are set to a fixed length, as a DC estimated code amount;

orthogonal transforming means for performing discrete cosine transform on the digital video signal for each of the blocks to produce a transform coding unit;

quantization estimating means for selecting a quantizer which enables N kinds (N ≥ 2) of code amounts to be equal to or smaller than a differential code amount which is obtained by subtracting the DC estimated code amount from a predetermined code amount, the code amounts being obtained by applying quantization and N kinds of variable length codings on AC components of the transformed signal;

quantizing means for quantizing the AC components of the transformed signal to produce a quantized signal, by using said quantizer which is selected by said quantization estimating means; and

variable length coding manes for applying one of the N kinds of variable length codings which are used in said quantization estimating means, on the quantized signal.

A ninth invention of the present invention (corresponding to claim 9) is a video signal coding apparatus according to any one of the 6th to 8th inventions, characterized in that the input digital video signal is a video signal which is previously divided into predetermined coding units, and

said quantization estimating means selects a quantizer for each of the coding units.

A tenth invention of the present invention (corresponding to claim 10) is a video signal coding apparatus according to the 9th invention, characterized in that the difference predictive code amount of the DC components is a difference between a predetermined code amount, and an average value of pixels of a block in the coding unit within the DC estimated code amount.

An eleventh invention of the present invention (corresponding to claim 11) is a video signal coding method inwhich an input digital video signal is coded by using discrete cosine transform, quantization, and first variable length coding, and first additional information is added to produce a first bit stream that can be transformed to a second bit stream by using decoding of the first variable length coding, and second variable length coding, and adding second additional information, characterized in that

in the quantization, quantization is performed while selecting a quantizer which enables both code amounts that are obtained by applying the first and second variable length codings on AC components of the discrete cosine transformed digital video signal, to be equal to or smaller than a differential code amount that is obtained by subtracting, from a predetermined code amount, a maximum additional information amount which is a larger one among information amounts of the first and second additional information.

A twelfth invention of the present invention (corresponding to claim 12) is a video signal coding apparatus characterized in that said apparatus comprises:

orthogonal transforming means for performing discrete cosine transform on an input digital video signal to produce a transformed signal;
additional information estimating means for detecting a maximum additional information amount which is a larger one among a code amount of first additional information that is to be attached to a first bit stream which is obtained by applying first variable length coding on the transformed signal, and a code amount of second additional information that is to be attached to a second bit stream which is obtained by applying second variable length coding on the transformed signal;
quantization estimating means for selecting a quantizer which enables both a code amount that is obtained by applying quantization and the first variable length coding on the transformed signal, and a code amount that is obtained by applying quantization and the second variable length coding on the transformed signal, to be equal to or smaller than a differential code amount that is obtained by subtracting the maximum additional information amount from a predetermined code amount;
quantizing means for quantizing the transformed signal to produce a quantized signal, by using said quantizer which is selected by said quantization estimating means; and
variable length coding manes for applying the first or second variable length coding on the quantized signal.

A thirteenth invention of the present invention (corresponding to claim 13) is a video signal coding apparatus according to the 12th invention, characterized in that the input digital video signal is a video signal which is previously divided into predetermined coding units, and

said quantization estimating means selects a quantizer for each of the coding units.

A fourteenth invention of the present invention (corresponding to claim 14) is a video signal coding apparatus according to the 13th invention, characterized in that the differential code amount is a difference between an average additional information amount which is obtained by dividing the maximum additional information amount by a number of the coding units in the input digital video signal, and the predetermined code amount.

A fifteenth invention of the present invention (corresponding to claim 15) is a video signal coding method in which an input digital video signal is coded by using discrete cosine transform, quantization, and first variable length coding, and first additional information is added to produce a first bit stream that can be transformed to a second bit stream by using decoding of the first variable length coding, and second variable length coding, and adding the first additional information with changing to second additional information, characterized in that

in the quantization, quantization is performed while selecting a quantizer which enables both code amounts that are obtained by applying the first and second variable length codings on AC components of the discrete cosine transformed digital video signal, to be equal to or smaller than a differential code amount that is obtained by subtracting, from a predetermined code amount, a maximum additional information amount which is a larger one of information amounts of the first and second additional information, and a maximum DC code amount which is a larger one of a predictive code amount which is obtained by performing difference predictive coding on DC components of the discrete cosine transformed input digital video signal, and a fixed code amount in the case where the DC components are set to a fixed length.

A sixteenth invention of the present invention (corresponding to claim 16) is a video signal coding method in which an input digital video signal is coded by using discrete cosine transform, difference predictive coding, quantization, and first variable length coding, and first additional information is added to produce a first bit stream that can be transformed to a second bit stream by using decoding of the first variable length coding, decoding of the difference predictive coding, and second variable length coding, and adding the first additional information with changing to second additional information, characterized in that

in the quantization, quantization is performed while selecting a quantizer which enables both code amounts that are obtained by applying the first and second variable length codings on AC components of the discrete cosine transformed digital video signal, to be equal to or smaller than a differential code amount that is obtained by subtracting, from a predetermined code amount, a maximum additional information amount which is a larger one of information amounts of the first and second additional information, and a maximum DC code amount which is a larger one among a predictive code amount which is obtained by performing difference predictive coding on DC components of the discrete cosine transformed input digital video signal, and a fixed code amount in the case where the DC components are set to a fixed length.

A seventeenth invention of the present invention (corresponding to claim 17) is a video signal coding apparatus characterized in that said apparatus comprises:

orthogonal transforming means for performing discrete cosine transform on an input digital video signal to produce a transformed signal;
code amount estimating means for setting a larger one of a difference predictive code amount which is obtained by performing difference predictive coding on DC components of the discrete cosine transformed input digital video signal, and a fixed code amount in the case where the DC components are set to a fixed length, as a DC estimated code amount;
additional information estimating means for detecting a maximum additional information amount which is a larger one among a code amount of first additional information that is to be attached to a first bit stream which is obtained by applying first variable length coding on the transformed signal, and a code amount of second additional information that is to be attached to a second bit stream which is obtained by applying second variable length coding on the transformed signal;
quantization estimating means for selecting a quantizer which enables both a code amount that is obtained by applying quantization and the first variable length coding on AC components of the transformed signal, and a code amount that is obtained by applying quantization and the second variable length coding on the AC components of the transformed signal, to be equal to or smaller than a differential code amount that is obtained by subtracting the DC estimated code amount and the maximum additional information amount from a predetermined code amount;
quantizing means for quantizing AC components of the transformed signal to produce a quantized signal, by using said quantizer which is selected by said quantization estimating means; and
variable length coding manes for applying the first or second variable length coding on the quantized signal.

An eighteenth invention of the present invention (corresponding to claim 18) is a video signal coding apparatus characterized in that said apparatus comprises:

orthogonal transforming means for performing discrete cosine transform on an input digital video signal to produce a transformed signal;
predictive coding means for performing difference predictive coding on DC components of the discrete cosine transformed input digital video signal, and obtaining a difference predictive code amount;
code amount estimating means for setting a larger one of the difference predictive code amount, and a fixed code amount in the case where the DC components are set to a fixed length, as a DC estimated code amount;
additional information estimating means for detecting a maximum additional information amount which is a larger one of a code amount of first additional information that is to be attached to a first bit stream which is obtained by applying first variable length coding on the transformed signal, and a code amount of second additional information that is to be attached to a second bit stream which is obtained by applying second variable length coding on the transformed signal;
quantization estimating means for selecting a quantizer which enables both a code amount that is obtained by applying quantization and the first variable length coding on AC components of the transformed signal, and a code amount that is obtained by applying quantization and the second variable length coding on the AC components of the transformed signal, to be equal to or smaller than a differential code amount that is obtained by subtracting DC estimated code amount and the maximum additional information amount from a predetermined code amount;
quantizing means for quantizing AC components of the transformed signal to produce a quantized signal, by using said quantizer which is selected by said quantization estimating means; and

variable length coding manes for applying the first or second variable length coding on the quantized signal.

A nineteenth invention of the present invention (corresponding to claim 19) is a video signal coding apparatus characterized in that said apparatus comprises:

code amount estimating means for, for each of predetermined blocks of an input digital video signal, obtaining an average value of pixels in the block, setting the average value as a value of DC components which are obtained by performing discrete cosine transform on the digital video signal, and setting a larger one of a difference predictive code amount which is obtained by performing difference predictive coding on the DC components, and a fixed code amount in the case where the DC components are set to a fixed length, as a DC estimated code amount;
orthogonal transforming means for performing discrete cosine transform on the digital video signal for each of the blocks to produce a transform coding unit;
additional information estimating means for detecting a maximum additional information amount which is a larger one among a code amount of first additional information that is to be attached to a first bit stream which is obtained by applying first variable length coding on the transform coding unit, and a code amount of second additional information that is to be attached to a second bit stream which is obtained by applying second variable length coding on the transform coding unit;
quantization estimating means for selecting a quantizer which enables both a code amount that is obtained by applying quantization and the first variable length coding on AC components of the transform coding unit, and a code amount that is obtained by applying quantization and the second variable length coding on the AC components of the transform coding unit, to be equal to or smaller than a differential code amount that is obtained by subtracting the DC estimated code amount and the maximum additional information amount from a predetermined code amount;
quantizing means for quantizing the AC components of the transform coding unit to produce a quantized signal, by using said quantizer which is selected by said quantization estimating means; and
variable length coding manes for applying the first or second variable length coding on the quantized signal.

A twentieth invention of the present invention (corresponding to claim 20) is a video signal coding apparatus according to any one of the 17th to 19th inventions, characterized in that the input digital video signal is a video signal which is previously divided into predetermined coding units, and

said quantization estimating means selects a quantizer for each of the coding units.

The twenty-first invention of the present invention (corresponding to claim 21) is a video signal coding apparatus according to the 20th invention, characterized in that the difference predictive code amount of the DC components is a difference obtained by subtracting, from the predetermined code amount, the DC estimated code amount for a block in the coding units, and an average additional information amount which is obtained by dividing the maximum additional information amount by a number of the coding units in the input digital video signal.

A twenty-second invention of the present invention (corresponding to claim 22) is a video signal coding method in which an input digital video signal is coded by a first system that uses discrete cosine transform, quantization, and first variable length coding, to produce a first bit stream that can be transformed to a second bit stream which is coded by a second system by using decoding of the first variable length coding, difference predictive coding, and second variable length coding, characterized in that

when a quantizer for the quantization is to be selected,
a second system code amount in the case where the difference predictive coding and the second variable length coding are performed on a digital video signal which is discrete cosine transformed and quantized previously in time to a discrete cosine transformed input digital video signal which is the object of the quantization
is compared with a preset ideal code amount of the second system, and
when the second system code amount is equal to or smaller than the ideal code amount, a quantizer which performs coding at a first target code amount that is previously determined in the first system is selected, and
when the second system code amount is larger than the ideal code amount, a quantizer which performs coding at a code amount that is smaller than the first target code amount is selected.

A twenty-third invention of the present invention (corresponding to claim 23) is a video signal coding method in which an input digital video signal is coded by using discrete cosine transform, difference predictive coding, quantization, and first variable length coding to produce a first bit stream that can be transformed to a second bit stream by using decoding of the first variable length coding, decoding of the difference predictive coding, and second variable length coding, characterized in that

when a quantizer for the quantization is to be selected,
a second system code amount in the case where the difference predictive coding and the second variable length coding are performed on a digital video signal which is discrete cosine transformed, difference predictive coded, and quantized previously in time to a discrete cosine transformed input digital video signal which is the object of the quantization
is compared with a preset ideal code amount of the second system, and
when the second system code amount is equal to or smaller than the ideal code amount, a quantizer which performs coding at a first target code amount that is previously determined in the first system is selected, and
when the second system code amount is larger than the ideal code amount, a quantizer which performs coding at a code amount that is smaller than the first target code amount is selected.

A twenty-fourth invention of the present invention (corresponding to claim 24) is a video signal coding method according to the 22nd or 23rd invention, characterized in that the ideal code amount is stepwise increased by a substantially constant value with the passage of time.

A twenty-fifth invention of the present invention (corresponding to claim 25) is a video signal coding method according to any one of the 22nd to 24th inventions, characterized in that, when the second system code amount is larger than the ideal code amount, a quantizer which performs coding at a code amount that is obtained by subtracting a difference between the second system code amount and the ideal code amount from the first target code amount is selected.

A twenty-sixth invention of the present invention (corresponding to claim 26) is a video signal coding method according to any one of the 22nd to 25th inventions, characterized in that the digital video signal which is discrete cosine transformed, and quantized previously in time means a predetermined partial signal which is previous to the discrete cosine transformed input digital video signal which is the object of the quantization.

A twenty-seventh invention of the present invention (corresponding to claim 27) is a video signal coding apparatus in which an input digital video signal is coded by a first system that uses discrete cosine transform, quantization, and first variable length coding, to produce a first bit stream that can be transformed to a second bit stream which is coded by a second system by using decoding of the first variable length coding, difference predictive coding, and second variable length coding, characterized in that

said apparatus comprises:
orthogonal transforming means for performing discrete cosine transform on the input digital video signal to produce a transformed signal;
quantizing means for quantizing the transformed signal to produce a quantized signal;
DC component code amount estimating means for estimating a difference predictive code amount in the case where the difference predictive coding is performed on DC components of a digital video signal which is discrete cosine transformed and quantized previously in time to the transformed signal which is the object of the quantization in said quantizing means;
second-system code amount estimating means for estimating a second system code amount which is a total of the difference predictive code amount, and a code amount in the case where the second variable length coding is performed on AC components of the digital video signal which is discrete cosine transformed and quantized previously in time;
quantization estimating means for comparing the second system code amount with a preset ideal code amount of the second system, and, when the second system code amount is equal to or smaller than the ideal code amount, selecting a quantizer which performs coding at a first target code amount that is previously determined in the first system, and, when the second system code amount is larger than the ideal code amount, selecting a quantizer which performs coding at a code amount that is smaller than the first target code amount; and
variable length coding means for applying the first variable length coding on the quantized signal, and wherein
said quantizing means quantizes AC components of the transformed signal which is an object of the quantization, by using said quantizer which is selected by said quantization estimating means, thereby producing the quantized signal.

A twenty-eighth invention of the present invention (corresponding to claim 28) is a video signal coding apparatus in which an input digital video signal is coded by using discrete cosine transform, difference predictive coding, quantization, and first variable length coding to produce a first bit stream that can be transformed to a second bit stream by using decoding of the first variable length coding, decoding of the difference predictive coding, and second variable length coding, characterized in that

said apparatus comprises:

orthogonal transforming means for performing discrete cosine transform on the input digital video signal to produce a transformed signal;

quantizing means for quantizing the transformed signal to produce a quantized signal;

DC component code amount estimating means for estimating a DC code amount in the case where the difference predictive coding is performed on DC components of a digital video signal which is discrete cosine transformed, difference predictive coded, and quantized previously in time to the transformed signal which is the object of the quantization in said quantizing means;

second-system code amount estimating means for estimating a second system code amount which is a total of the DC code amount, and a code amount in the case where the second variable length coding is performed on AC components of the digital video signal which is discrete cosine transformed, difference predictive coded, and quantized previously in time;

quantization estimating means for comparing the second system code amount with a preset ideal code amount of the second system, and, when the second system code amount is equal to or smaller than the ideal code amount, selecting a quantizer which performs coding at a first target code amount that is previously determined in the first system, and, when the second system code amount is larger than the ideal code amount, selecting a quantizer which performs coding at a code amount that is smaller than the first target code amount; and

variable length coding means for applying the first variable length coding on the quantized signal, and wherein said quantizing means quantizes AC components of the transformed signal which is an object of the quantization, by using said quantizer which is selected by said quantization estimating means, thereby producing the quantized signal.

A twenty-ninth invention of the present invention (corresponding to claim 29) is a video signal coding apparatus according to the 27th or 28th invention, characterized in that the ideal code amount is stepwise increased by a substantially constant value with the passage of time.

A thirtieth invention of the present invention (corresponding to claim 30) is a video signal coding apparatus according to any one of the 27th to 29th inventions, characterized in that, when the second system code amount is larger than the ideal code amount, said quantization estimating means selects a quantizer which performs coding at a code amount that is obtained by subtracting a difference between the second system code amount and the ideal code amount from the first target code amount.

A thirty-first invention of the present invention (corresponding to claim 31) is a video signal coding apparatus according to any one of the 27th to 30th inventions, characterized in that the digital video signal which is discrete cosine transformed and quantized previously in time means a predetermined partial signal which is previous to the discrete cosine transformed input digital video signal which is the object of the quantization.

A thirty-second invention of the present invention (corresponding to claim 32) is a video signal coding method in which an input digital video signal is coded by using discrete cosine transform, quantization, and first variable length coding, and first additional information is added to produce a first bit stream that can be transformed to a second bit stream by using decoding of the first variable length coding, difference predictive coding, and second variable length coding, and adding the first additional information with changing to second additional information, characterized in that

in the quantization, quantization is performed while selecting a quantizer which enables both code amounts that are obtained by applying the first and second variable length codings on AC components of the discrete cosine transformed digital video signal, to be equal to or smaller than a differential code amount that is obtained by subtracting, from a predetermined code amount, a larger one among a first total in which a fixed code amount in the case where DC components of the discrete cosine transformed input digital video signal are set to a fixed length is added to an information amount of the first additional information, and a second total in which a difference predictive code amount which is obtained by performing difference predictive coding on DC components of the discrete cosine transformed input digital video signal is added to an information amount of the second additional information.

A thirty-third invention of the present invention (corresponding to claim 33) is a video signal coding method in which an input digital video signal is coded by using discrete cosine transform, difference predictive coding, quantization, and first variable length coding, and first additional information is added to produce a first bit stream that can be transformed to a second bit stream by using decoding of the first variable length coding, decoding of the difference predictive coding, and second variable length coding, and adding the first additional information with changing to second additional information, characterized in that

in the quantization, quantization is performed while selecting a quantizer which enables both code amounts that are obtained by applying the first and second variable length codings on AC components of the discrete cosine transformed digital video signal, to be equal to or smaller than a differential code amount that is obtained by subtracting, from a predetermined code amount, a larger one among a first total in which a difference predictive code amount which is obtained by performing difference predictive coding on DC components of the discrete cosine transformed input digital video signal is added to an information amount of the first additional information, and a second total in which a fixed code amount in the case where DC components of the discrete cosine transformed input digital video signal are set to a fixed length is added to an information amount of the second additional information.

A thirty-fourth of the present invention (corresponding to claim 34) is a video signal coding apparatus characterized in that said apparatus comprises:

orthogonal transforming means for performing discrete cosine transform on an input digital video signal to produce a transformed signal;

first detecting means for detecting a first total amount of a fixed code amount in the case where DC components of the transformed signal are set to a fixed length, and a code amount of first additional information that is to be attached to a first bit stream which is obtained by applying first variable length coding on the transformed signal;

second detecting means for detecting a second total amount of a difference predictive code amount which is obtained by performing difference predictive coding on the DC components of the transformed signal, and a code amount of second additional information that is to be attached to a second bit stream which is obtained by applying second variable length coding on the transformed signal;

quantization estimating means for selecting a quantizer which enables both a code amount that is obtained by applying quantization and the first variable length coding on AC components of the transformed signal, and a code amount that is obtained by applying quantization and the second variable length coding on the AC components of the transformed signal, to be equal to or smaller than a differential code amount that is obtained by subtracting a larger one among the first total amount and the second total amount from a predetermined code amount;

quantizing means for quantizing the AC components of the transformed signal to produce a quantized signal, by using said quantizer which is selected by said quantization estimating means; and

variable length coding manes for applying the first or second variable length coding on the quantized signal.

A thirty-fifth invention of the present invention (corresponding to claim 35) is a video signal coding apparatus characterized in that said apparatus comprises:

orthogonal transforming means for performing discrete cosine transform on an input digital video signal to produce a transformed signal;

predictive coding means for performing difference predictive coding on DC components of the discrete cosine transformed input digital video signal, and obtaining a difference predictive code amount;

first detecting means for detecting a first total amount of the difference predictive code amount, and a code amount of first additional information that is to be attached to a first bit stream which is obtained by applying first variable length coding on the transformed signal;

second detecting means for detecting a second total amount of a fixed code amount in the case where DC components of the transformed signal are set to a fixed length, and a code amount of second additional information that is to be attached to a second bit stream which is obtained by applying second variable length coding on the transformed signal;

quantization estimating means for selecting a quantizer which enables both a code amount that is obtained by applying quantization and the first variable length coding on AC components of the transformed signal, and a code amount that is obtained by applying quantization and the second variable length coding on the AC components of the transformed signal, to be equal to or smaller than a differential code amount that is obtained by subtracting a larger one among the first total amount and the second total amount from a predetermined code amount;

quantizing means for quantizing the AC components of the transformed signal to produce a quantized signal, by using said quantizer which is selected by said quantization estimating means; and

variable length coding manes for applying the first or second variable length coding on the quantized signal.

As described above, quantization estimation in a coding process is performed by using plural VLCs, and a quantizer which, even when any one of the VLCs is used, does not exceed the specified code amount is selected. As a result, even when a bit stream which is compressed by using the present system is transformed into another compression system by using only bit stream transformation, it is possible to guarantee that the rate of the transformed bit stream can be set within a predetermined rate. In addition to VLCs, a quantizer is selected while estimating difference coding of DC components having a possibility of changing the rate of a bit stream, and the rate difference due to difference in syntax, whereby the accuracy can be further improved.

A thirty-sixth invention of the present invention (corresponding to claim 36) is a video signal coding apparatus characterized in that said apparatus comprises:

motion vector detecting means for, for an input image, detecting a motion vector with respect to a predetermined reference image;
difference image producing means for, for the input image, producing a first difference image with respect to the reference image;
filter coefficient determining means for calculating visual importance of the input image on the basis of the input image and the first difference image, and determining a filter coefficient for performing a filter process on the input image;
filter processing means for performing a filter process on the input image by using the filter coefficient, to produce a filter image;
motion compensating means for performing motion compensation on the filter image by using the motion vector, to produce a second difference image; and
coding means for performing coding on the second difference image to produce a coded data.

According to this configuration, a filter process is conducted on a region of lower visual importance, to reduce the code amount, so that a larger code amount can be allocated to a region of higher visual importance, and the image quality can be improved.

A thirty-seventh of the present invention (corresponding to claim 37) is a video signal coding apparatus according to the 36th invention, characterized in that said filter coefficient determining means calculates visual importance of the input image on the basis of an activity of the input image and an activity of the first difference image, and determines the filter coefficient.

A thirty-eighth invention of the present invention (corresponding to claim 38) is a video signal coding apparatus according to the 36th or the 37 invention, characterized in that said filter coefficient determining means selects the filter coefficient for performing the filter process, from a plurality of filter coefficient candidates.

A thirty-ninth invention of the present invention (corresponding to claim 39) is a video signal coding apparatus characterized in that said apparatus comprises:

motion vector detecting means for, for an input image, detecting a motion vector with respect to a predetermined reference image;
difference image producing means for, for the input image, producing a first difference image with respect to the reference image;
first filter processing means for performing a first filter process on the input image to produce a first filter image;
filter parameter determining means for calculating visual importance of the input image on the basis of the input image and the first difference image, and determining a filter parameter for performing a second filter process on the input image and the first filter image;
second filter processing means for performing a second filter process on the input image and the first filter image by using the filter parameter, to produce a second filter image;
motion compensating means for performing motion compensation on the second filter image by using the motion vector, to produce a second difference image; and
coding means for performing coding on the second difference image to produce a coded data.

According to this configuration also, a filter process is conducted on a region of lower visual importance, to reduce the code amount, so that a larger code amount can be allocated to a region of higher visual importance, and the image quality can be improved.

A fortieth invention of the present invention (corresponding to claim 40) is a video signal coding apparatus according to the 39th invention, characterized in that said filter parameter determining means calculates the visual importance on the basis of an activity of the input image and an activity of the first difference image, and determines the filter parameter.

A forty-first invention of the present invention (corresponding to claim 41) is a video signal coding apparatus according to the 39th or 40th invention, characterized in that said filter parameter determining means selects the filter parameter for performing the second filter process, from a plurality of filter parameter candidates.

A forty-second invention of the present invention (corresponding to claim 42) is a video signal coding apparatus according to any one of the 36th to 41st inventions, characterized in that the filter coefficient or the filter parameter is a coefficient in the predetermined unit of block.

A forty-third invention of the present invention (corresponding to claim 43) is a video signal coding apparatus according to any one of the 36th to 41st inventions, characterized in that the filter coefficient or the filter parameter is a coefficient in the unit of pixel.

A forty-fourth invention of the present invention (corresponding to claim 44) is a video signal coding apparatus according to any one of the 36th to 43rd inventions, characterized in that said filter coefficient determining means or said filter parameter determining means determines the filter coefficient or the filter parameter by curved surface approximation using the visual importance.

According to this configuration, a filter coefficient or a filter parameter is calculated by phase interpolation using visual importance. Therefore, the continuity in a block interface can be maintained, and a visual improvement can be realized.

A forty-fifth invention of the present invention (corresponding to claim 45) is a video signal coding apparatus according to any one of the 36th to 43rd inventions, characterized in that said filter coefficient determining means or said filter parameter determining means places the visual importance at one of four corners in a block constituting the input image, and determines the filter coefficient or the filter parameter while.

According to this configuration, in phase interpolation using visual importance, the visual importance can be placed in one of four corners of a block, whereby the calculation accuracy of the interpolation calculation can be reduced, and a reduction in the number of circuits in a calculation section can be realized.

A forty-sixth invention of the present invention (corresponding to claim 46) is a video signal coding apparatus according to any one of the 36th to 43rd inventions, characterized in that said filter coefficient determining means or said filter parameter determining means performs edge detection on a block constituting the input image, and, when an edge exists, places the visual importance in an edge interface, and determines the filter coefficient or the filter parameter.

According to this configuration, in phase interpolation using visual importance, the visual importance can be placed in an interface of an edge in a block, whereby the edge can be preserved, and an improvement of the image quality can be realized.

A forty-seventh invention of the present invention (corresponding to claim 47) is a video signal coding apparatus according to any one of the 36th to 46th inventions, characterized in that said motion vector detecting means performs same motion vector detection on the input image to produce a difference image, and a motion vector corresponding to a picture type of the input image.

According to this configuration, irrespective of the picture type of the input image, the same motion vector detection is performed to produce a difference image, whereby visual importance can be calculated at a higher accuracy, and an improvement of the image quality of a reproduced image can be realized.

A forty-eighth invention of the present invention (corresponding to claim 48) is a video signal coding apparatus according to any one of the 36th to 46th inventions, characterized in that said motion vector detecting means performs motion vector detection on the input image by bidirectional interframe prediction to produce a difference image, and a motion vector corresponding to a picture type of the input image.

A forty-ninth invention of the present invention (corresponding to claim 49) is a video signal coding apparatus characterized in that said apparatus comprises:

difference image producing means for performing motion vector detection in the unit of block on an input image, to produce its motion vector, block type information indicative of information of the block coding, and a first difference image;

filter parameter calculating means for calculating visual importance in a block in the unit of block, from the input image, the block type information, and the first difference image, and calculating a filter parameter for controlling a degree of filtering in the unit of pixel, from the visual importance;

filter coefficient determining means for determining a filter coefficient from a plurality of filter coefficient candidates, based on the filter parameter;

filter calculating means for performing a filter calculation on the input image by using the filter coefficient to produce a filter image;

motion compensating means for performing motion compensation on the filter image by using the motion vector and the block type information, to produce a second difference image; and

coding means for performing coding on the second difference image to produce a coded data.

According to this configuration, a filter process is conducted on a region of lower visual importance, to reduce the information amount, so that a larger code amount can be allocated to a region of higher visual importance, and the image quality can be improved.

A fiftieth invention of the present invention (corresponding to claim 50) is a program recording medium characterized in that a program for realizing all or a part of means of the video signal coding apparatus according to any one of the 2nd to 3rd, 6th to 10th, 12th to 14th, 17th to 21st, 27th to 31st, and 34th to 49th inventions by a computer is stored in said medium.

Brief Description of Drawings

Fig. 1 is a flowchart illustrating a video signal coding method of Embodiment 1 of the invention.

Fig. 2 is a flowchart illustrating a coding method used in coding of a bit stream which is coded by the video signal coding method of Embodiment 1 of the invention of Fig. 1, by a video signal coding method other than the video signal coding method of Fig. 1.

Fig. 3 is a flowchart illustrating a video signal coding method of Embodiment 1 of the invention which is different from that of Fig. 1.

Fig. 4 is a flowchart illustrating a coding method used in coding of a bit stream which is coded by the video signal coding method of Embodiment 1 of the invention of Fig. 3, by a video signal coding method other than the video signal coding method of Fig. 3.

Fig. 5 is a block diagram of a video signal coding apparatus of Embodiment 2 of the invention.

Fig. 6 is a block diagram of a video signal coding apparatus of Embodiment 2 of the invention which is different from Fig. 5.

Fig. 7 is a block diagram of a video signal coding apparatus of Embodiment 2 of the invention which is different from Figs. 5 and 6.

Fig. 8 is a block diagram of a decoding apparatus which decodes a bit stream produced in Fig. 7.

Fig. 9 is a flowchart illustrating a video signal coding method of Embodiment 3 of the invention.

Fig. 10 is a block diagram of a video signal coding apparatus of Embodiment 3 of the invention.

Fig. 11 is a view illustrating the operation of a quantization estimator 1005 of the video signal coding apparatus of Embodiment 3 of the invention.

Fig. 12 is a block diagram of a video signal coding apparatus of Embodiment 4 of the invention.

Fig. 13 is a block diagram of Embodiments 5, 7, 8, 9, 10, 11, and 12 of the invention.

Fig. 14 is a block diagram of Embodiment 6 of the invention.

Fig. 15 is a view showing relationships between a block activity and visual importance in Embodiments 5, 6, 7, 8, 9, and 10 of the invention.

Fig. 16 is a view showing a calculation of a filter parameter from a filter parameter in the unit of block by curved surface approximation in Embodiments 5, 6, and 7 of the invention.

Fig. 17 is a view showing relationships between a filter parameter and a filter coefficient in Embodiment 5 of the invention.

Fig. 18 is a view showing a calculation of a filter parameter in the unit of pixel from visual importance by curved surface approximation in Embodiment 8 of the invention.

Fig. 19 is a view showing a calculation of a filter parameter in the unit of pixel from visual importance by curved surface approximation in Embodiment 9 of the invention.

Fig. 20 is a view showing placement of visual importance in Embodiment 10 of the invention.

Fig. 21 is a view showing an edge detecting method in Embodiment 10 of the invention.

Fig. 22 is a view illustrating a calculation of visual importance by detection of a change of a motion vector.

Best Mode for Carrying Out the Invention

Hereinafter, embodiments of the invention will be described with reference to drawings.

(Embodiment 1)

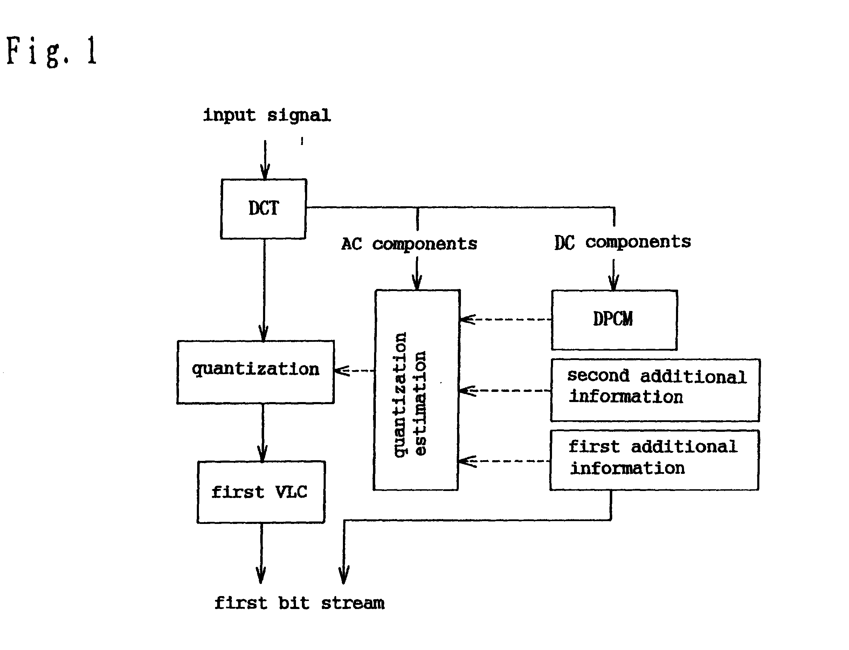

Fig. 1 is a flowchart illustrating a video signal coding method of Embodiment 1 of the invention. The video signal coding method of the embodiment is a method in which coding is performed so that, even when a bit stream that has been produced by a first compression system so as to be set within a desired code amount is transformed to a bit stream of a second compression system, the code amount can be set within the desired code amount.

In the above-mentioned first compression system, DC components which are obtained by applying DCT (Discrete Cosine Transform) on an input digital video signal are set at a fixed length, AC components are quantized and variable length coded, additional information is added to the DC and AC components to produce a bit stream, and the bit stream is recorded. By contrast, in the second compression system, the bit stream is received from the first compression system, the DC components are not applied to fixed-length recording, but coded by applying DPCM (Difference Predictive Coding), the AC components are applied to variable length decoding corresponding to the variable length coding which is applied in the first compression system, and then coded by applying variable length coding other than that which is applied in the first compression system, additional information is coded by using a method other than that which is applied in the first compression system, and a bit stream is produced from the DC and AC components and the additional information.

First, the production of a bit stream in the first compression system will be described.

Fig. 1 is a flowchart illustrating the production of a bit stream in the first compression system.

In the first compression system, as shown in Fig. 1, an input digital video signal is first DCT transformed. In the DCT transformed digital video signal, DC components are recorded at a fixed length. Also additional information is recorded at a fixed length by a method based on the coding standard of the first compression system. AC components of the DCT transformed digital video signal are quantized and coded by the method based on the coding standard of the first compression system. When the amount of the quantized and coded components fails to be set within a predetermined code amount, the bit stream produced by the first compression system cannot be transmitted. In the quantization of the AC components, therefore, the quantization must be performed so that the amount of the quantized and coded components can be set within the predetermined code amount. In the case where, from the bit stream produced by the first compression system, another bit stream is to be produced by the second compression system, when the code amount of the bit stream fails to be set within the predetermined code amount, the bit stream produced by the second compression system cannot be transmitted. In other words, in order to enable the bit stream produced by the first compression system to be transmitted, and also to enable the bit stream produced by the second compression system to be transmitted, the selection of the method of quantizing the AC components in the first compression system, or specifically a quantizer which is used for quantizing the AC components in the first compression system is important.

Therefore, a method of quantizing the AC components in the first compression system, i.e., the selection of a quantizer which is used in the quantization will be described.

First, with respect to the DC components of the DCT transformed signal, the code amount in the case where the DC components are coded by applying DPCM (Difference Predictive Coding) performed in the second compression system is estimated. Next, a first additional information amount in the case where the additional information is compressed in the first system, and a second additional information amount in the case where the additional information is compressed in the second system are obtained.

By using the above-mentioned information, a larger one is obtained among the code amount of the DC components in the case where coding is performed in the first compression system and the code amount of the DC component applied with DPCM in the case where coding is performed in the second compression system. Similarly, a larger one of the first additional information amount in the case where coding is performed in the first compression system, and a second additional information amount in the case where coding is performed in the second compression system is obtained.

Next, a value which is obtained by subtracting, from the predetermined code amount, the thus obtained larger one of the code amount of the DC components in the case where coding is performed in the first compression system, and that in the case where coding is performed in the second compression system, and the larger one of the first additional information amount and the second additional information amount is calculated as code amount allocation for the AC components.

Thereafter, a quantizer is selected which, when the AC components are quantized and variable length coded in the first compression system and the second compression system, enables the code amounts of both the AC components after the variable length codings to be set within the thus obtained allocated code amount for the AC components. The AC components are quantized and then variable length coded by using the selected quantizer. The information of the used quantizer, the DC components, and the additional information are added to the coded AC components to produce a first bit stream in the first compression system.

Next, a method of transforming the first bit stream produced in the first compression system to a second bit stream of the second compression system will be described.

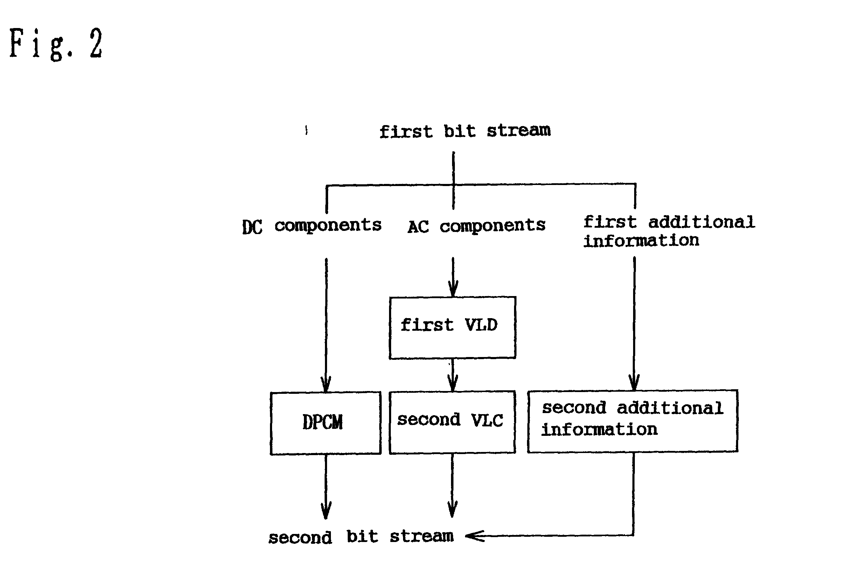

Fig. 2 shows a method of transforming the first bit stream which is produced in the first compression system as described above, to the second bit stream of the second compression system. As shown in Fig. 2, the first bit stream produced in the first compression system is input, the DC components are coded by applying DPCM (Difference Predictive Coding), and the additional information is coded by applying coding in the second compression system. The AC components are transformed to AC components in the second compression system by applying variable length decoding, and then applying variable length coding used in the second compression system. Thereafter, the second bit stream in the second compression system is produced from the DC components, the AC components, and second additional information which are coded in the second compression system. The code amount of the thus obtained second bit stream is controlled so as to be equal to or smaller than the predetermined code amount in the coding of the first bit stream, and hence equal to or smaller than a code amount at which transmission is enabled.

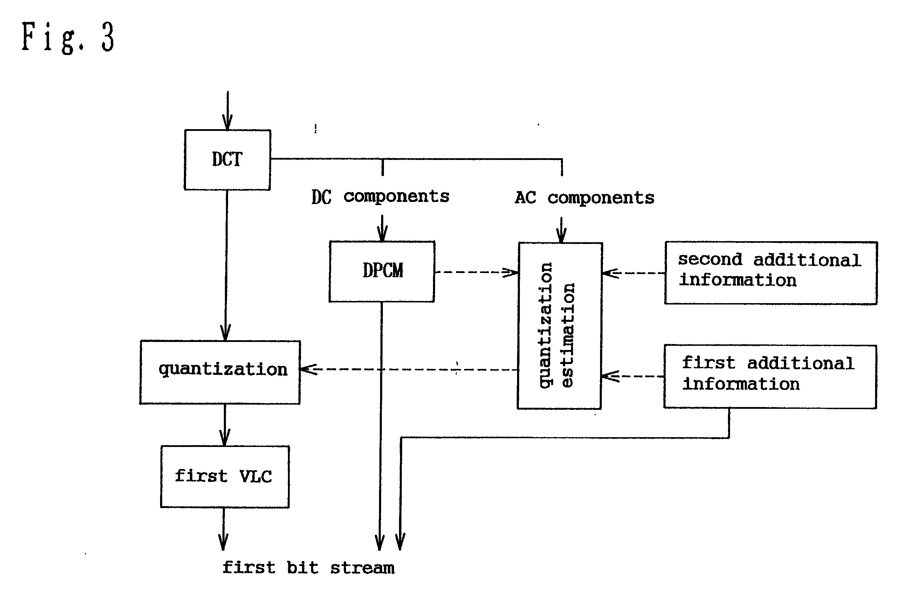

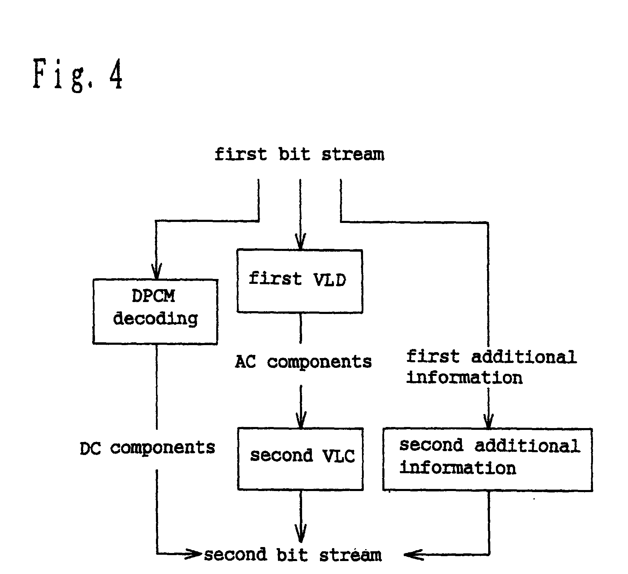

In the above, the example has been described in which, in the first compression system, when the DC components are to be coded, coding is performed at a fixed length, and, in the second compression system, when the DC components are to be coded, coding is performed by applying DPCM (Difference Predictive Coding). In the following, an example will be described in which, in the first compression system, when the DC components are to be coded, coding is performed by applying DPCM (Difference Predictive Coding), and, in the second compression system, when the DC components are to be coded, coding is performed at a fixed length. In the following, namely, on the first compression system and the second compression system using Figs. 3 and 4, such example is described that is opposite to the example which is described using by Figs. 1 and 2.

Fig. 3 is a flowchart illustrating a production of a bit stream in a first compression system which is different from that of Fig. 1, and Fig. 4 is a flowchart illustrating a method of transforming the bit stream produced in the first compression system shown in Fig. 3 to a second bit stream in the second compression system.

In the method shown in Fig. 1, DPCM (Difference Predictive Coding) is used only for estimating the code amount in the application of DPCM on the DC components. By contrast, in the coding method shown in Fig. 3, DPCM (Difference Predictive Coding) is used not only for estimating the code amount in the application of DPCM on the DC components, but also for producing the bit stream together with the estimation of the code amount.

Also in the coding method shown in Fig. 3, as described in the coding method shown in Fig. 1, with respect to the DC components of the DCT transformed signal, a larger one of the code amount of the DC components, and that in the case where coding is performed by applying DPCM performed is obtained. Furthermore, a larger one of the first additional information amount in the case where coding is performed in the first compression system, and the second additional information amount in the case where coding is performed in the second compression system is obtained.

Next, a value which is obtained by subtracting, from the predetermined code amount, the thus obtained larger one of the code amount of the DC components and that of the DC components due to DPCM, and the larger one of the first additional information amount and the second additional information amount is calculated as code amount allocation for the AC components. Thereafter, a quantizer is selected which, when the AC components are quantized and variable length coded in the first compression system and the second compression system, enables the code amount of both the AC components after the variable length codings to be set within the thus obtained allocated code amount for the AC components.

The AC components are quantized and then variable length coded by using the selected quantizer. The information of the used quantizer, the DC components which has applied DPCM, and the first additional information are added to the coded Ac components to produce a first bit stream in the first compression system.

By contrast, in the bit stream transforming method shown in Fig. 4, although a method of decoding the first bit stream produced by the method shown in Fig. 3 to transform it to another second bit stream is shown, the coding of the DC components is different from the cases of Figs. 1 and 3 as described above, and hence a signal which has applied DPCM is decoded unlike the case of Fig. 2.

As described above, in the video signal coding method of Embodiment 1 of the invention, compression in the first compression system is performed also in consideration of the code amount in the case where coding is performed in the second compression system. Therefore, the code amounts of both the first bit stream which is produced in the first compression system, and the second bit stream which is obtained by transforming the first bit stream in the second compression system can be set to fall within a predetermined code amount.

The compression system used in the embodiment is an example, and the same effects can be attained by another configuration. In summary, coding is performed while controlling so that a value that is obtained by adding to an element in which the code amount is changed each time when bit stream transformation between different high-efficiency codings is performed, the maximum value of the code amount of corresponding data other than the element of the variable code amount, such as additional information is equal to or smaller than a predetermined code amount. According to this configuration, even when bit stream transformation is performed, the code amount does not exceed the predetermined code amount.

In the embodiment, the case where two kinds of compression systems are used has been described. The number of the kinds of compression systems is not limited to two, and three or more kinds of compression systems may be used. In this case, it is required only that a bit stream before transformation is produced so that the code amounts of bit streams which are respectively produced in the compression systems are equal to or smaller than the predetermined code amount.

Although the degree of guarantee is lowered, the selection of a quantizer for quantizing AC components may be performed while omitting a part such as prediction of the amount of additional information or DC components.

In Embodiment 1 described above, when a quantizer for quantizing AC components in the first compression system is to be selected, DCT transformed DC components are used for estimating the code amount of DC components and components which are obtained by applying DPCM on the DC components. Alternatively, in order to estimate the code amount, DCT transformed DC components may not be used, and an average value of pixels of the input digital signal maybe used while regarding the value as the value of DCT transformed DC components.

(Embodiment 2)

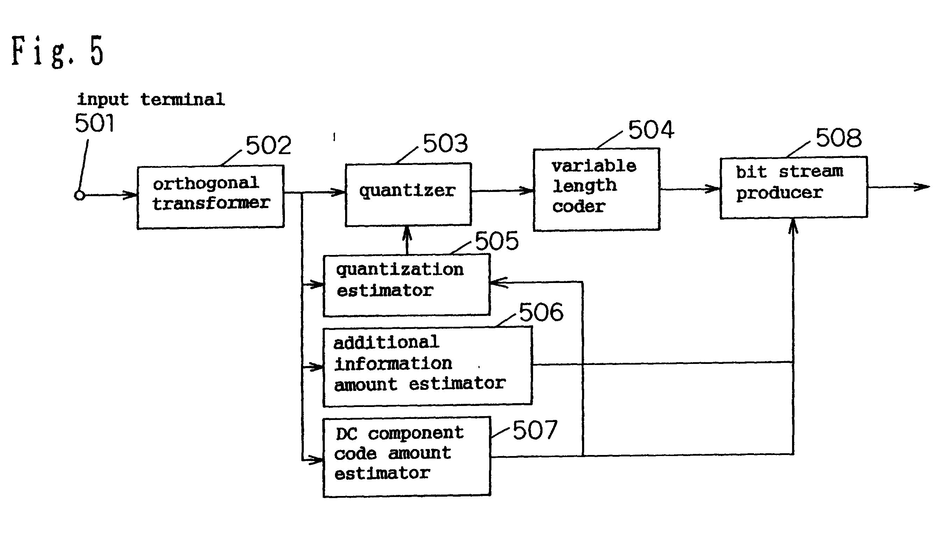

Fig. 5 is a block diagram of a video signal coding apparatus of Embodiment 2 of the invention, 501 denotes an input terminal into which a digital video signal is to be input, 502 denotes an orthogonal transformer which performs orthogonal transformation on the input signal, 503 denotes a quantizer which quantizes the input signal, 504 denotes a variable length coder which performs variable length coding on the input signal, 505 denotes a quantization estimator which determines a quantizer that is to be used for quantizing AC components of the digital video signal in the quantizer 503, 506 denotes an additional information amount estimator which estimates an additional information amount in coding of the input video signal, 507 denotes a DC component code amount estimator which estimates a code amount in coding of DC components of the input signal, and 508 denotes a bit stream producer which produces a bit stream. The compression method in the video signal coding apparatus of the embodiment is identical with the video signal coding method of Embodiment 1.

The thus configured video signal coding apparatus of Embodiment 2 of the invention will be described with reference to Fig. 5.

A digital video signal which is input from the input terminal 501 is orthogonal transformed by the orthogonal transformer 502, and then output to the quantizer 503, the quantization estimator 505, the additional information amount estimator 506, and the DC component code amount estimator 507.

The DC component code amount estimator 507 estimates the code amount in the case where coding is performed on DC components of the input signal by applying DPCM (Difference Predictive Coding) performed in the second compression system, compares the estimated code amount with the code amount in the case where fixed-length recording is performed in the first compression system, or compares the code amount of DC components which have applied DPCM (Difference predictive Coding) with that of DCT transformed DC components, and outputs information of the larger code amount to the quantization estimator 505. At the same time, the DC component code amount estimator 507 outputs the DC components to the bit stream producer 508.

The additional information amount estimator 506 estimates a first additional information amount in the case where the additional information is compressed in the first compression system, and a second additional information amount in the case where the additional information is compressed in the second compression system, compares the code amounts with each other, and outputs information of the larger one of the code amounts to the quantization estimator 505. At the same time, the additional information amount estimator 506 compresses the additional information in the first compression system, and outputs the result to the bit stream producer 508 as first additional information.

The quantization estimator 505 calculates a value which is obtained by subtracting, from a predetermined code amount, the code amount of information output from the additional information amount estimator 506 and the DC component code amount estimator 507, as code amount allocation for the AC components. The estimator selects a quantizer which, when the AC components are quantized and variable length coded in the first compression system and the second compression system, enables both the code amounts of the AC components after the variable length codings to be set within the thus obtained allocated code amount for the AC components, and outputs its information to the quantizer 503. The quantizer 503 quantizes AC components from the orthogonal transformer 502 by using the quantizer which is selected by the quantization estimator 505, and outputs the result to the variable length coder 504. The variable length coder 504 performs variable length coding on the input signal, and outputs the result to the bit stream producer 508. At this time, variable length coded AC components, and information of the used quantizer are sent to the bit stream producer 50.

Next, the bit stream producer 508 produces a bit stream from the DC components from the DC component code amount estimator 507, the first additional information from the additional information amount estimator 506, the variable length coded AC components from the variable length coder 504, and the information of the used quantizer, and outputs the bit stream.

As described above, the video signal coding apparatus shown in Fig. 5 can produce a bit stream which is set within a predetermined code amount, both in the first compression system and the second compression system.

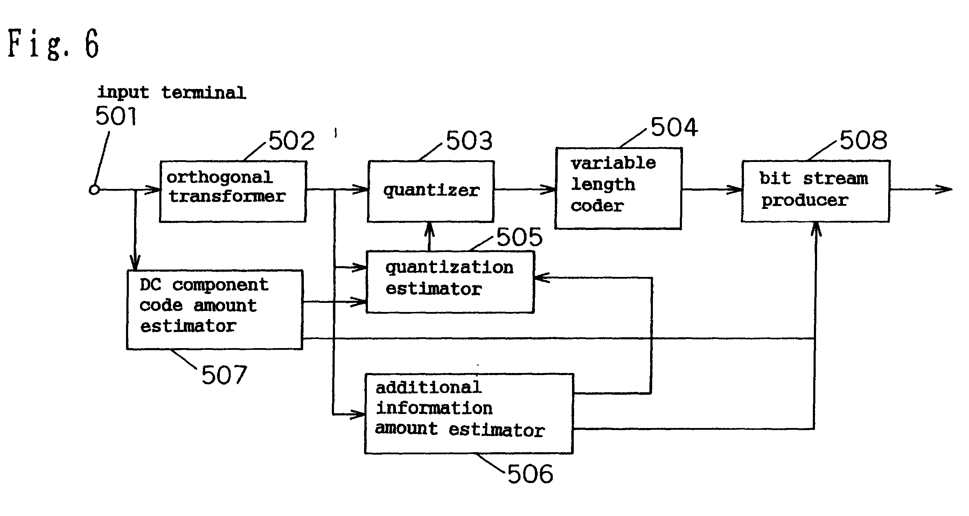

In the embodiment described with reference to Fig. 5, from the DC components of the digital video signal which has been orthogonal transformed (DCT transformed) by the orthogonal transformer 502, the DC component code amount estimator 507 estimates the code amount in the case where the DC components are coded by DPCM (Difference Predictive Coding). Alternatively, as shown in Fig. 6, the DC component code amount estimator 507 of the video signal coding apparatus may not be placed in a position subsequent to the orthogonal transformer 502, but in a position where the digital video signal from the input terminal 501 is directly input to the estimator, the value of the DPCM coded DC components which is estimated by the DC component code amount estimator 507 may be regarded as average value of pixels of the digital video signal from the input terminal 501, and the value may be used.

In the embodiment described with reference to Figs. 5 and 6, the digital video signal from the input terminal 501 is directly input to the orthogonal transformer 502 and the DC component code amount estimator 507. Alternatively, in Fig. 5, a block divider which divides the digital video signal into, for example, blocks each consisting of $8 \times 8$ or 64 pixels may be disposed between the input terminal 501 and the orthogonal transformer 502, and, in Fig. 6, a block divider which divides the digital video signal into blocks may be disposed between the input terminal 501 and the orthogonal transformer 502, and between the input terminal 501 and the DC component code amount estimator 507.

The video signal coding apparatus of Embodiment 2 described with reference to Fig. 5 is an apparatus corresponding to the video signal coding method of Embodiment 1 described with reference to Fig. 1. In addition to the video signal coding apparatus of Embodiment 2 described with reference to Fig. 5, there is a video signal coding apparatus corresponding to the video signal coding method of Embodiment 1 described with reference to Fig. 3. In the video signal coding apparatus corresponding to the video signal coding method of Fig. 3, the circuit is configured so that the DC components are applied to DPCM not only in order to select a quantizer for quantizing the AC components, and a bit stream is produced by using a result of coding of the DC components by DPCM. Also in such a case, in the same manner as the video signal coding apparatus shown in Fig. 5, the effect that, in both the first compression system and the second compression system, the code amount of the produced bit stream can be set within a predetermined code amount is attained.

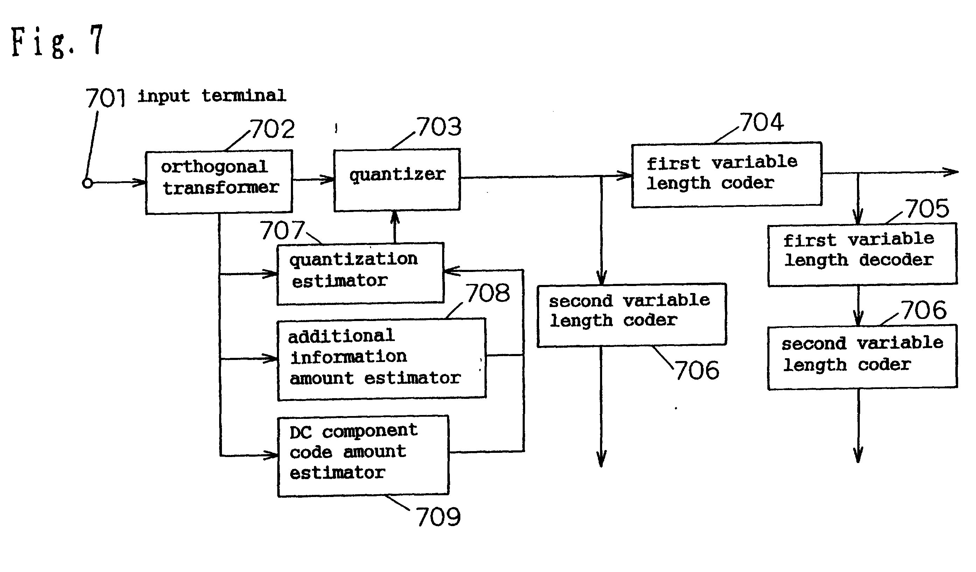

In the embodiment described with reference to Fig. 5 or 6, production of a bit stream in the first compression system has been described. Next, a video signal coding apparatus which can simultaneously produce a bit stream of the first compression system and that of the second compression system will be described with reference to Fig. 7.

In Fig. 7, 701 denotes an input terminal into which a video signal that is identical with the digital video signal input to the input terminal 501 of Fig. 5 is to be input, 702 denotes an orthogonal transformer which performs orthogonal transformation on the input signal, 703 denotes a quantizer which quantizes the input signal, 704 denotes a first variable length coder which performs first variable length coding on the input signal, 705 denotes a first variable length decoder which performs first variable length decoding on the input signal, 706 denotes a second variable length coder which performs second variable length coding on the input signal, 707 denotes a quantization estimator which determines a quantizer that is to be used for quantizing AC components of the digital video signal in the quantizer 703, 708 denotes an additional information amount estimator which estimates an additional information amount in coding of the input video signal, and 709 denotes a DC component code amount estimator which estimates a code amount in coding of DC components of the input signal. The input terminal 701 is identical with the input terminal 501, the orthogonal transformer 702 is identical with the orthogonal transformer 502, the quantizer 703 is identical with the quantizer 503, and the first variable length coder 704 is identical with the variable length coder 504. Furthermore, the quantization estimator 707 is identical with the quantization estimator 505, the additional information amount estimator 708 is identical with the additional information amount estimator 506, and the DC component code amount estimator 709 is identical with the DC component code amount estimator 507.

Fig. 7 shows a method of transforming a first bit stream which has applied the first variable length coding to a second bit stream which has applied the second variable length coding. A video signal which is input from the input terminal 701 is transformed into a bit stream which has been compressed and applied to the first variable length coding, by the orthogonal transformer 702, the quantizer 703, and the first variable length coder 704. In order to output a bit stream which has applied the second variable length coding in the compression process, one of methods of coding the quantized video signal by the second variable length coder 706, and of decoding the video signal which has applied the first variable length coding, by the first variable length decoder 705, and coding the decoded signal by the second variable length coder 706 may be used.

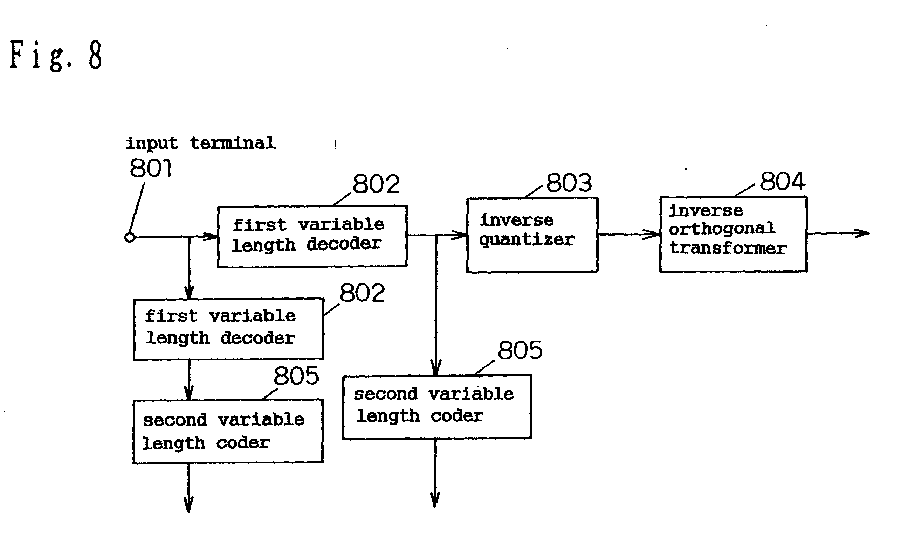

Next, Fig. 8 is a block diagram of a decoding apparatus which decodes the bit stream produced in Fig. 7. In Fig. 8, 801 denotes an input terminal into which the compressed bit stream from the first variable length coder 704 is to be input, 802 denotes a first variable length decoder which performs first variable length decoding on the input signal, 803 denotes an inverse quantizer which inverse quantizes the input signal, 804 denotes an inverse orthogonal transformer which performs inverse orthogonal transformation on the input signal, and 805 denotes a second variable length coder which performs second variable length coding on the input signal.

Fig. 8 shows a method of, in a decoding process, transforming a bit stream which has applied the first variable length coding to a bit stream which has applied the second variable length coding, and that of decoding the bit stream which has applied the first variable length coding. A bit stream which is input from the input terminal 801 is expanded (decoded) by the first variable length decoder 802, the inverse quantizer 803, and the inverse orthogonal transformer 804, to be transformed to a video signal. The output of a bit stream which has applied the second variable length coding in the expansion process is enabled by decoding the input signal by the first variable length decoder 802, and coding the decoded signal by the second variable length coder 805. As a configuration for the above, as shown in Fig. 8, a configuration in which the first variable length decoder 802 and the second variable length coder 805 are disposed inside the decoding apparatus, or another configuration in which the first variable length decoder 802 and the second variable length coder 805 are not disposed inside the decoding apparatus, but disposed outside the decoding apparatus may be used. In this way, the first variable length decoder 802 and the second variable length coder 805 may be disposed inside the decoding apparatus, or outside the decoding apparatus. Similarly, the first variable length decoder 705 and the second variable length coder 706 of the video signal coding apparatus shown in Fig. 7 may be disposed inside the video signal coding apparatus, or outside the video signal coding apparatus.

Figs. 7 and 8 show configurations in which only the variable length coding is changed. The coding of DC components, and the transformation to additional information for a bit stream are performed in the same manner as the transformations for items other than AC components which have been described with reference to Figs. 2 and 4.

The compression system used in above-described Embodiment 1 and Embodiment 2 is an example, and the same effects can be attained by another configuration. In summary, coding is performed while controlling so that a value that is obtained by adding to an element in which the code amount is changed each time when bit stream transformation between different high-efficiency codings is performed, the maximum value of the code amount of corresponding data other than the element of the variable code amount, such as additional information is equal to or smaller than a predetermined code amount. According to this configuration, even when bit stream transformation is performed, the code amount does not exceed the predetermined code amount.

In above-described Embodiment 1 and Embodiment 2, the case where two kinds of compression systems are used has been described. The number of the kinds of compression systems is not limited to two, and three or more kinds of compression systems may be used. In this case, it is required only that a bit stream before transformation is produced so that the code amounts of bit streams which are respectively produced in the compression systems are equal to or smaller than the predetermined code amount.

In above-described Embodiment 1 and Embodiment 2, although the degree of guarantee is lowered, the selection of a quantizer for quantizing AC components may be performed while omitting a part such as prediction of the amount of additional information or DC components.

In the above, the means constituting the video signal coding apparatus of Embodiment 2 are described as hardware. Alternatively, the whole or a part of the means constituting the video signal coding apparatus may be replaced with software having the same functions as corresponding ones of the above-mentioned hardware.

(Embodiment 3)

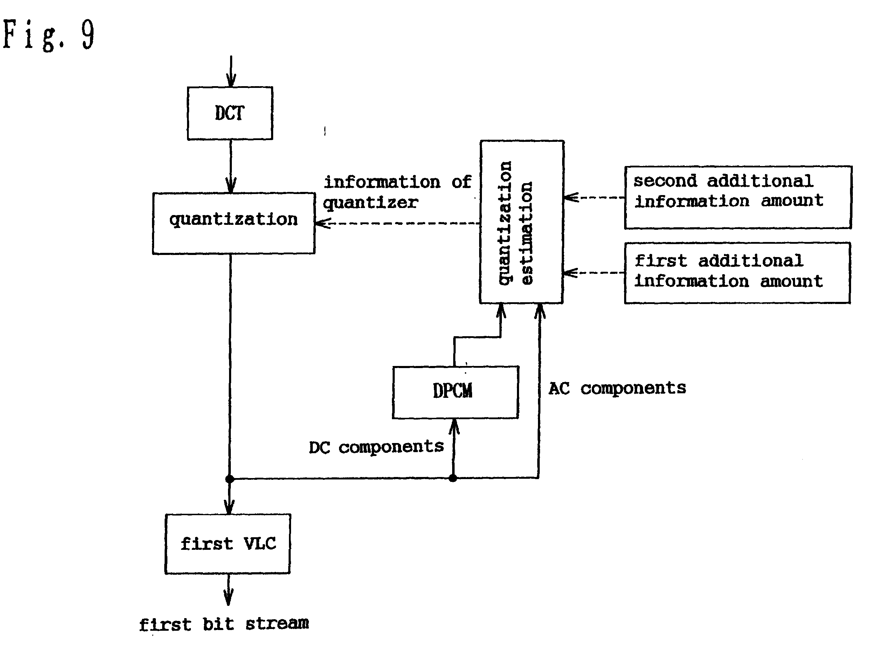

Next, a video signal coding method and a video signal coding apparatus of Embodiment 3 of the invention will be described with reference to Figs. 9, 10, and 11.

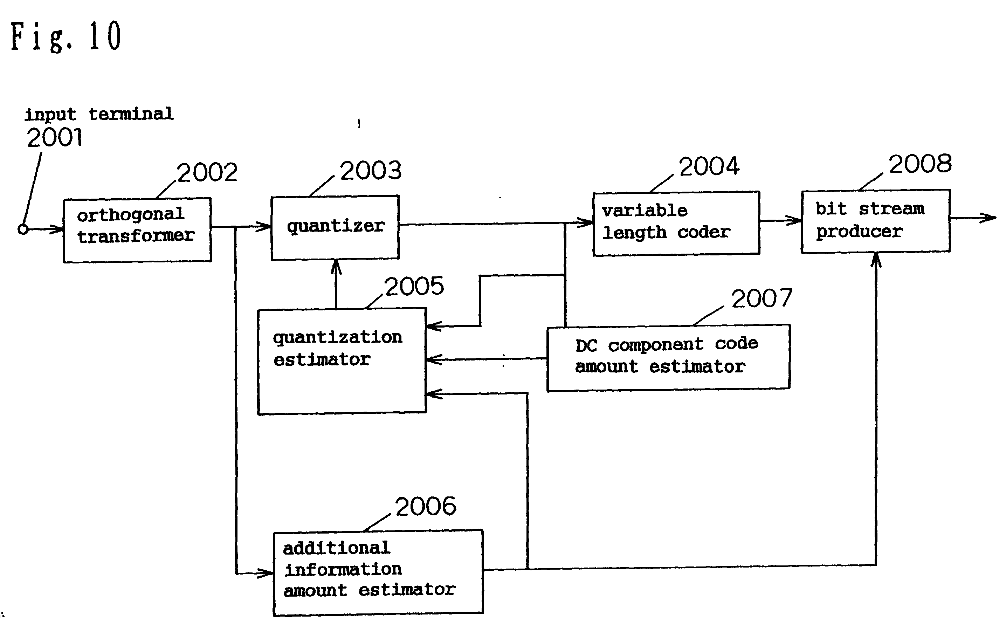

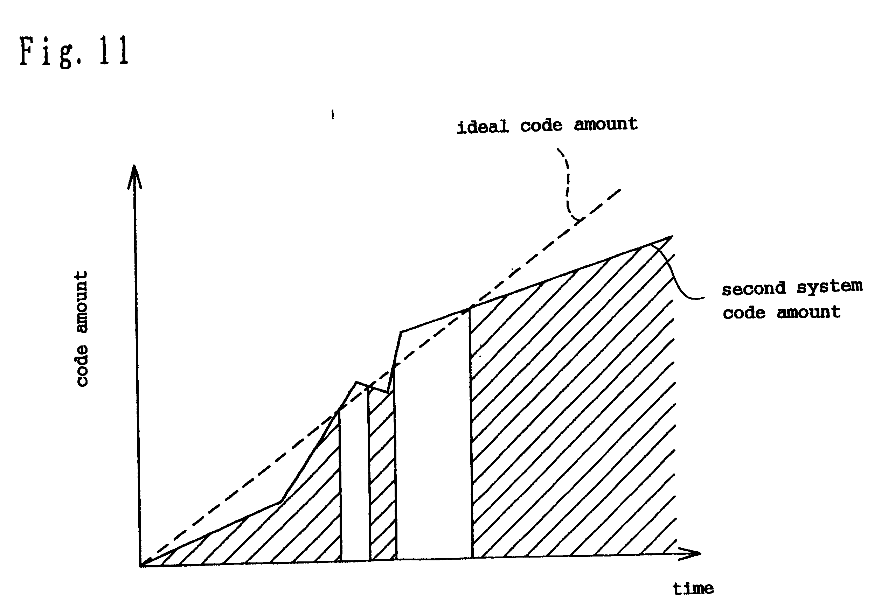

Fig. 9 is a flowchart illustrating the video signal coding method of Embodiment 3 of the invention, and Fig. 10 is a block diagram of the video signal coding apparatus of Embodiment 3 of the invention. Fig. 11 will be described later.

As shown in Fig. 10, the video signal coding apparatus of Embodiment 3 of the invention is configured by an orthogonal transformer 2002, a quantizer 2003, a variable length coder 2004, a quantization estimator 2005, an additional information amount estimator 2006, a DC component code amount estimator 2007, and a bit stream producer 2008.

The orthogonal transformer 2002, the quantizer 2003, the variable length coder 2004, the additional information amount estimator 2006, and the bit stream producer 2008 operate in the same manner as corresponding ones of the orthogonal transformer 502, the quantizer 503, the variable length coder 504, the additional information amount estimator 506, and the bit stream producer 508 of above-described Embodiment 2 of Fig. 5, respectively.

By contrast, the functions of the quantization estimator 2005 and the DC component code amount estimator 2007 are different the function of the quantization estimator 505 or the DC component code amount estimator 507 of Embodiment 2. In Embodiment 3, therefore, differences from Embodiments 1 and 2 will be described.

The DC component code amount estimator 2007 estimates a difference predictive code amount in the case where difference predictive coding is performed on DC components of a digital video signal which is discrete cosine transformed and quantized previously in time to a transformed signal which is transformed by the orthogonal transformer 2002 to function as the object of the quantization.

The quantization estimator 2005 estimates a second system code amount of a total of the difference predictive code amount which is estimated by the DC component code amount estimator 2007, and the code amount in the case where, in the second compression system, variable length coding is performed on AC components of the digital video signal which is discrete cosine transformed and quantized previously in time. The quantization estimator 2005 compares a preset ideal code amount with the second system code amount.

Fig. 11 shows the temporal change of the ideal code amount, and that of the second system code amount. In Fig. 11, the temporal change of the ideal code amount is indicated by a broken line, and that of the second system code amount is indicated by a solid line. The portion where the ideal code amount is larger than the second system code amount in the case where the ideal code amount and the second system code amount are compared with each other at each timing is hatched.

In Embodiment 3, the second system code amount means a total code amount of the difference predictive code amount which is previous in time to the transformed signal that is the object of the quantization, and the code amount in the case where variable length coding is performed on AC components in the second compression system. The ideal code amount is stepwise increased by a constant value with the passage of time.

When the second system code amount is equal to or smaller than the ideal code amount as a result of comparison of the ideal code amount and the second system code amount, the quantization estimator 2005 calculates a value which is obtained by subtracting the code amount of information output from the additional information amount estimator 2006 from a predetermined code amount in the first compression system, as code amount allocation for the AC components, selects a quantizer which enables the code amount to be set within the allocated code amount, and outputs its information to the quantizer 2003.

By contrast, when the second system code amount is larger than the ideal code amount, a value which is obtained by subtracting the ideal code amount from the second system code amount is subtracted from the predetermined code amount in the first compression system, and subtracting from the result the code amount of information output from the additional information amount estimator 2006 is calculated as code amount allocation for the AC components. A quantizer which enables the code amount to be set within the allocated code amount is selected, and its information is output to the quantizer 2003.

Thereafter, the quantizer 2003 quantizes AC components of the input video signal which is the object of quantization and supplied from the orthogonal transformer 2002, by using the quantizer which is selected by the quantization estimator 2005, and outputs the result to the variable length coder 2004. The variable length coder 2004 performs variable length coding on the input signal, and outputs the result to the bit stream producer 2008.

Next, the bit stream producer 2008 produces a bit stream from the additional information from the additional information amount estimator 2006, and the variable length coded AC and DC components from the variable length coder 2004, and outputs the bit stream.

In above-described Embodiment 3, the DC component code amount estimator 2007 estimates the difference predictive code amount in the case where difference predictive coding is performed on DC components of a digital video signal which is discrete cosine transformed and quantized previously in time to a transformed signal which is the object of the quantization. Alternatively, the DC component code amount estimator 2007 may estimate a code amount in the case where DC components of a digital video signal which is discrete cosine transformed and quantized previously in time to a transformed signal which is the object of the quantization is set to have a fixed length, or in other words decoding of difference predictive coding is performed, and it may be used in place of the above-mentioned difference predictive code amount.

In the alternative, the quantization estimator 2005 estimates a first system code amount of a total of the code amount which is estimated by the DC component code amount estimator 2007, and the code amount in the case where, in the first compression system, variable length coding is performed on AC components of a digital video signal which is discrete cosine transformed, discrete predictive coded, and quantized previously in time, and compares a preset ideal code amount with the first system code amount.

In above-described Embodiment 3, the second system code amount means a total code amount of the difference predictive code amount which is previous in time to the transformed signal that is the object of the quantization, and the code amount in the case where variable length coding is performed on AC components in the second compression system. Alternatively, the second system code amount may not be a total code amount, but a part of the total, for example, a code amount of a partial period immediately before the transformed signal which is the object of the quantization. Similarly, the first system code amount may not be a total code amount, but a part of the total. In this case, the ideal code amount means an ideal code amount in a period when the second system code amount or the first system code amount is defined.

The means constituting the video signal coding apparatus of above-described Embodiment 3 may be configured as hardware, or may be replaced with software having the same functions as corresponding ones of the above-mentioned hardware.

(Embodiment 4)

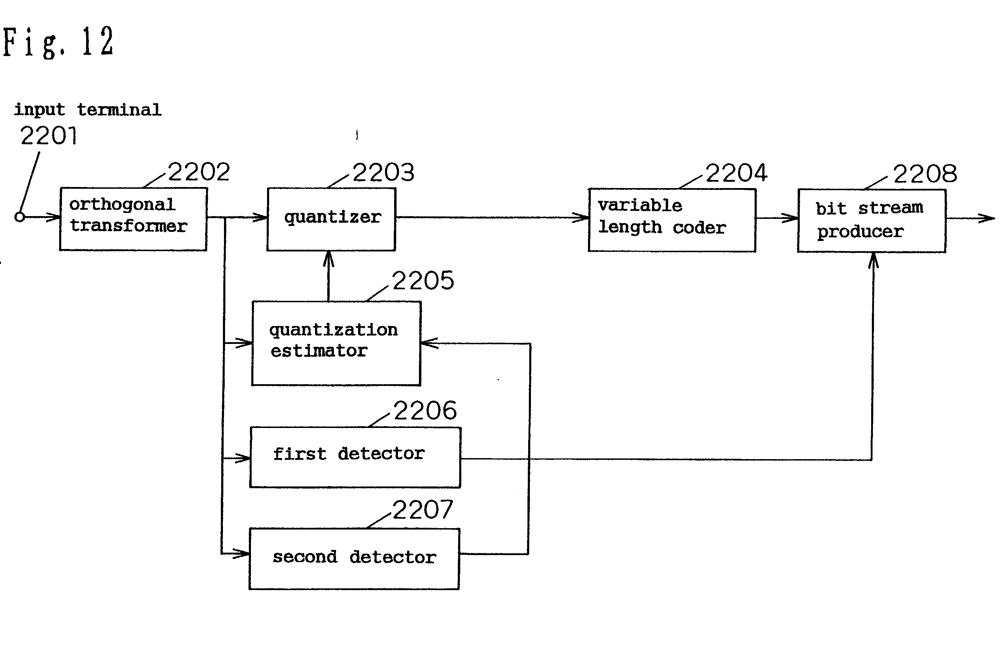

Next, a video signal coding method and a video signal coding apparatus of Embodiment 4 of the invention will be described with reference to Fig. 12.

Fig. 12 is a block diagram of the video signal coding apparatus of Embodiment 4 of the invention. As shown in Fig. 12, the video signal coding apparatus of Embodiment 4 of the invention is configured by an orthogonal transformer 2202, a quantizer 2203, a variable length coder 2204, a quantization estimator 2205, a first detector 2206, a second detector 2207, and a bit stream producer 2208.

The orthogonal transformer 2202, the quantizer 2203, the variable length coder 2204, and the bit stream producer 2208 operate in the same manner as corresponding ones of the orthogonal transformer 502, the quantizer 503, the variable length coder 504, and the bit stream producer 508 of above-described Embodiment 2 of Fig. 5, respectively.

By contrast, the function of the quantization estimator 2205 is different that of the quantization estimator 505 of Embodiment 2. In place of the additional information amount estimator 506 and the DC component code amount estimator 507 which are disposed in the video signal coding apparatus of Embodiment 2 of Fig. 5, the video signal coding apparatus of Embodiment 4 comprises the first detector 2206 and the second detector 2207.

In Embodiment 4, therefore, differences from Embodiments 1 and 2 will be described.

The first detector 2206 detects the size of a total (first total) of the code amount in the case where the DC components of the input signal are recorded at a fixed length in the first compression system, and a first additional information amount which is to be added to the input signal in the case where the AC components of the input signal are compressed in the first compression system, and outputs the information of the size to the quantization estimator 2205. At the same time, the first detector 2206 outputs the DC components and the first additional information amount to the bit stream producer 2208.

The second detector 2207 estimates the code amount in the case where coding is performed by applying DPCM (Difference Predictive Coding) performed in the second compression system, on DC components of the input signal, detects the size of a total (second total) of the code amount and a second additional information amount which is to be added to the input signal in the case where the AC components of the input signal are compressed in the second compression system, and outputs the information of the size to the quantization estimator 2205.

The quantization estimator 2205 calculates a value which is obtained by subtracting, from the predetermined code amount, a larger one of the first total detected by the first detector 2206, and the second total detected by the second detector 2207, as code amount allocation for the AC components, selects a quantizer which, when the AC components are quantized and variable length coded in the first compression system and the second compression system, enables the code amount of both the AC components after the variable length codings to be set within the thus obtained allocated code amount for the AC components, and outputs its information to the quantizer 2203.

Thereafter, the quantizer 2203 quantizes the AC components of the input video signal which is the object of quantization and supplied from the orthogonal transformer 2202, by using the quantizer which is selected by the quantization estimator 2205, and outputs the result to the variable length coder 2204. The variable length coder 2204 performs variable length coding on the input signal, and outputs the result to the bit stream producer 2208.

Next, the bit stream producer 2208 produces a bit stream from the DC components and the first additional information from the first detector 2206, and the variable length coded AC components from the variable length coder 2204, and outputs the bit stream.

In above-described Embodiment 4, the first detector 2206 detects the size of a total of the code amount in the case where the DC components of the input signal are recorded at a fixed length in the first compression system, and the first additional information amount, and the second detector 2207 detects the size of a total of the code amount in the case where coding is performed by applying DPCM (Difference Predictive Coding) performed in the second compression system, on DC components of the input signal, and a second additional information amount. Alternatively, the first detector 2206 may detect the size of a total of the code amount in the case where coding is performed by applying DPCM (Difference Predictive Coding) performed in the second compression system, on DC components of the input signal, and set the size as the first total, and the second detector 2207 may detect the size of a total of the code amount in the case where the DC components of the input signal are recorded at a fixed length in the first compression system, and the first additional information amount, and set the size as the second total.

The means constituting the video signal coding apparatus of above-described Embodiment 4 may be configured as hardware, or may be replaced with software having the same functions as corresponding ones of the above-mentioned hardware.

(Embodiment 5)

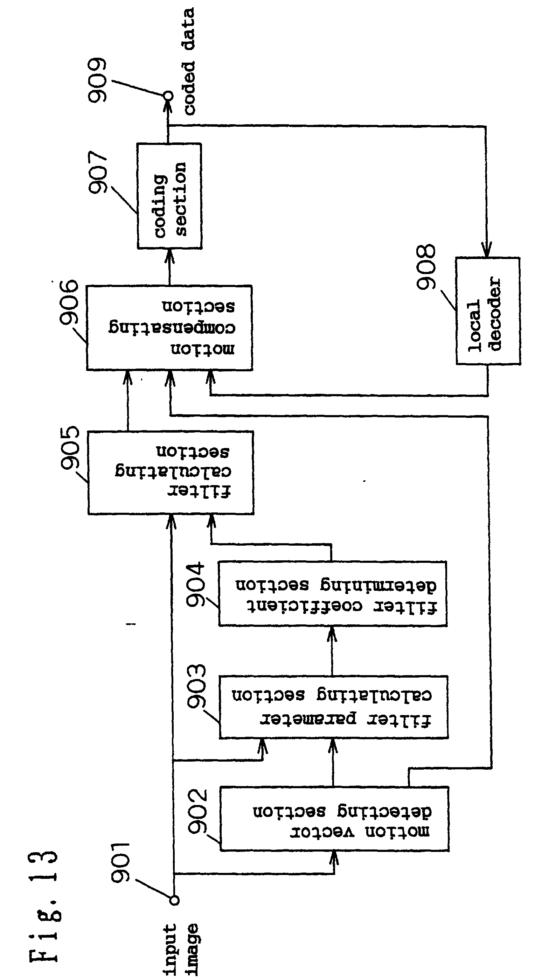

Next, Embodiment 5 of the invention will be described with reference to Figs. 13, 15, 16, and 17.

In Fig. 13, 901 denotes an inputting section, 902 denotes a motion vector detecting section, 903 denotes a filter parameter calculating section, 904 denotes a filter coefficient determining section, 905 denotes a filter calculating section, 906 denotes a motion compensating section, 907 denotes a coding section, 908 denotes a local decoder, and 909 denotes an outputting section.

The operation of the thus configured embodiment will be described.

An image signal which is input from the inputting section 901 is input to the motion vector detecting section 902, the filter parameter calculating section 903, and the filter calculating section 905. Irrespective of the picture type of the input image, the motion vector detecting section 902 performs motion vector detection on the input image with respect to a reference image stored in a memory, and outputs a motion vector and a first difference image. The motion vector is input to the motion compensating section 906, and the first difference image is input to the filter parameter calculating section 903 respectively.

The filter parameter calculating section 903 calculates a first activity in the unit of block from the input image, and a second activity in the unit of block from the first difference image. From the first activity and the second activity, thereafter, visual importance which indicates the degree of visual importance in the unit of block with respect to the input image is calculated. In a region containing an edge and the like, the first activity is large, but the second activity is small because the motion compensation is effective. By contrast, in a region containing a signal of high randomness such as noises, both the first activity and the second activity are large.

In the case where a sum of absolute values of differences between an intrablock pixel and a block average is used as an activity, with respect to a region containing an edge and the like, usually, it is often that the first activity is 1,000 or larger and the second activity is 100 or smaller, and it is characteristic that the second activity is smaller than the first activity. By contrast, with respect to a signal of high randomness, it is often that both the first activity and the second activity are 1,000 or larger, and it is characteristic that the second activity does not become small.

In the specification, the visual importance is a degree at which a man pays attention when evaluation is performed on an image. With respect to a region of high edge and saturation, a man pays attention at a high degree, or visual importance is high. With respect to a region of high noise and randomness, a man pays attention at a low degree, or visual importance is low. From the visual importance, a filter parameter which is a parameter for controlling the degree of filtering in the unit of pixel on the input image is calculated. The filter parameter is input to the filter coefficient determining section 904.

The filter coefficient determining section 904 determines a filter coefficient from the input filter parameter. The filter coefficient is input to the filter calculating section 905. The filter calculating section 905 performs a filter calculation on the input image by using the input filter coefficient, to produce a filter image. The filter image is input to the motion compensating section 906.

When the picture type of the input filter image is a P-picture or a B-picture, the motion compensating section 906 produces a predictive image from the input motion vector and the reference image stored in the memory, calculates the difference between the predictive image and the filter image, and outputs a second difference image. The second difference image is input to the coding section 907. When the picture type of the input filter image is an I-picture, the filter image is deemed as a second difference signal, and input to the coding section 907.

The coding section 907 codes the input second difference image, and outputs a coded data. The coded data is input to the local decoder 908 and the outputting section 909. The local decoder 908 decodes the input coded data and produces a decoded image. The decoded image is input to the motion compensating section 906. The outputting section 909 outputs the input coded data to recording and transmitting media or the like.

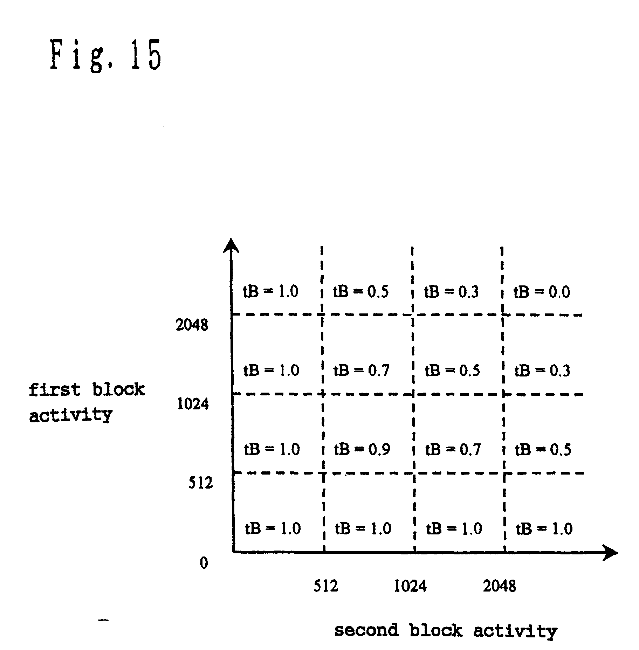

The operation of the filter parameter calculating section 903 will be described in detail with reference to Figs. 15, 16, and 17. In Embodiments 5 to 9, in order to simplify the description, each block is assumed to have a size of $2 \times 2$ pixels.

First, with respect to the input image, an average value of pixel values in the unit of block is calculated. Differences between pixels in the block and the above-mentioned average value are calculated, and difference signals are produced. A sum of absolute values of the difference signals is calculated, and the sum is set as the first activity. Next, with respect to the first difference image, a sum of absolute values of pixel values in the unit of block is calculated, and the sum is set as the second activity. In the embodiment, a sum of absolute values of pixels is used as the activity. Alternatively, variance of pixels in a block, the magnitude of a sum of absolute values of Hadamard transformed AC components, or the like may be used as the activity.

From the first activity and the second activity, visual importance tB which is a parameter indicating visual importance in the block is calculated by using a table of visual importance shown in Fig. 15. tB is expressed by one of continuous values of 0 to 1. As the value is closer to 0, visual importance is lower, or the value indicates that the region is not visually important. By contrast, as the value is closer to 1, visual importance is higher, or the value indicates that the region is visually important.

For example, an arbitrary block b will be considered. When the first activity of the block b is 2,000 and the second activity is 1,000, tB of the block b is 0.7 from the table of Fig. 15. This table is an example, and the thresholds of the activities and the value of tB may be changed. In the above example, when the first activity of the block b is 2,000 and the second activity is 1,000, tB is 0.7. This value may be set to be 0.6.

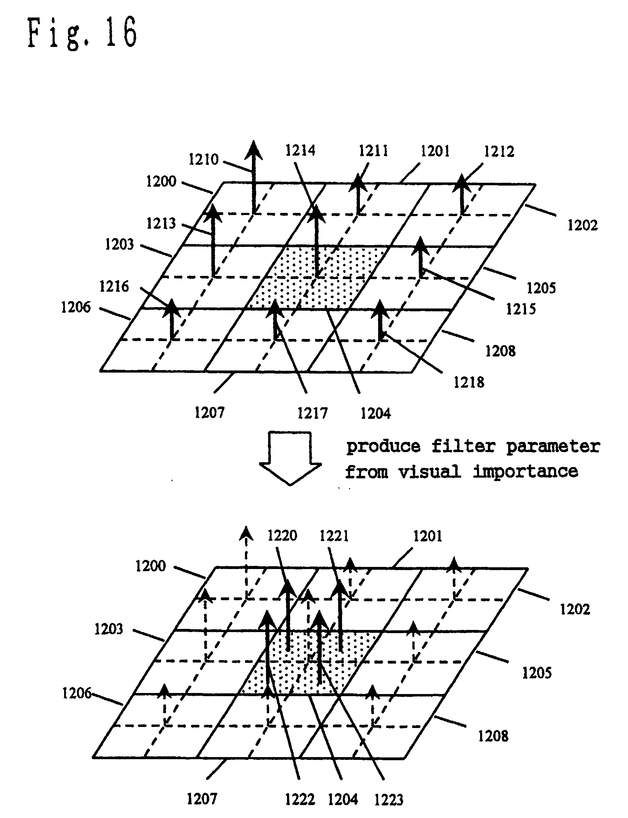

Thereafter, a filter parameter tP which is a parameter for controlling the degree of filtering in the unit of pixel is calculated from the visual importance tB. The calculation is performed by the following method. As shown in Fig. 16, tP of a pixel in a block is set to be tB of the block. In Fig. 16, 1200 to 1208 denote blocks, and 1210 to 1218 denote visual importance tB of the blocks. Each visual importance is placed at the center of the block to which the importance belongs. The values of the visual importance are as follows: 1210 has 0.7; 1211 has 0.5; 1212 has 0.5; 1213 has 0.7; 1214 has 0.7; 1215 has 0.5; 1216 has 0.5; 1217 has 0.5; and 1218 has 0.5.

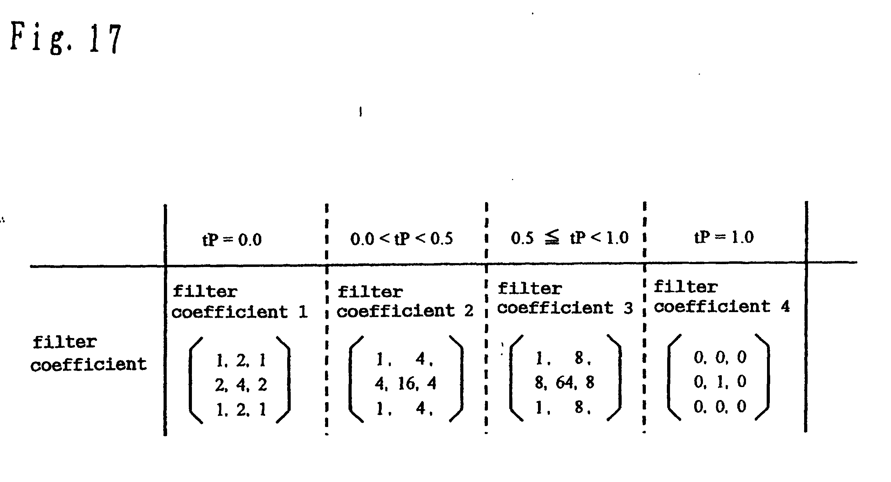

The block 1204 will be considered. Filter parameters 1220 to 1223 of four pixels in the block 1204 have the same value as the visual importance of the block 1204. In other words, the values of the filter parameters 1220 to 1223 of the pixels in the block 1204 are as follows: 1220 has 0.7; 1221 has 0.7; 1222 has 0.7; and 1223 has 0.7. Thereafter, from the filter parameter tP, the filter coefficient of a filter which is to be used for processing the pixel is determined by using a filter coefficient table shown in Fig. 17. When tP is 0.7, a filter coefficient is selected to be 3.

As described above, visual importance of the input image is calculated from the input image and the difference image, and a filter process is performed on a region of low visual importance, thereby reducing the information amount. As a result, a larger code amount can be allocated to a region of higher visual importance, and improvement of the image quality can be realized.

In Embodiment 5 described above, visual importance is calculated by using the first activity and the second activity. Alternatively, visual importance may be calculated by using the orientation and/or the size of the motion vector of a noted block, or the noted block and blocks (for example, adjacent eight blocks) adjacent to the block.

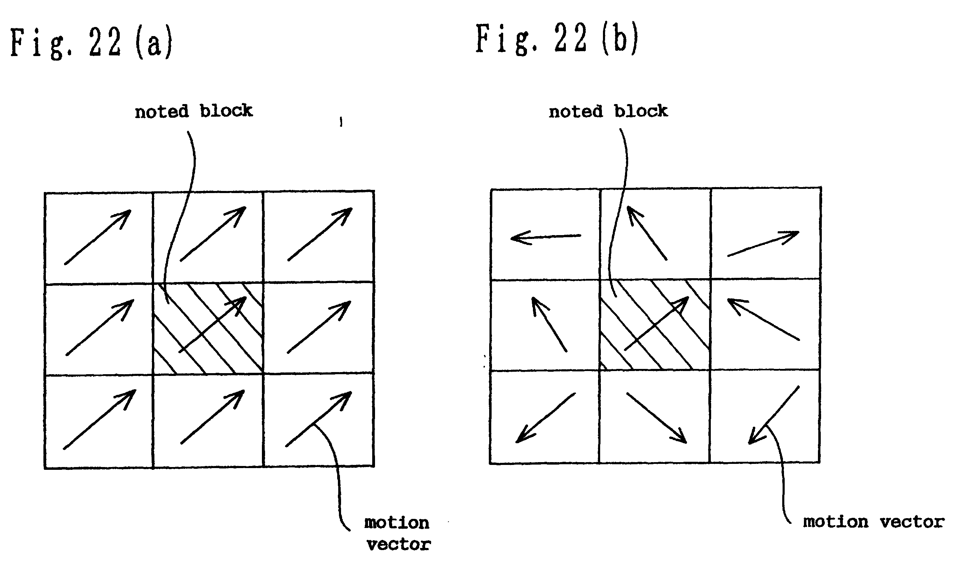

Specifically, visual importance can be calculated by detecting the manner of changes of the orientations and/or the sizes of the motion vectors of a noted block and blocks adjacent to the block. For example, calculation of visual importance based on changes of motion vectors will be described with reference to Fig. 22. In the case where temporal and spatial correlations of images are high, motion vectors of a noted block and blocks in the periphery of the block are arranged as shown in Fig. 22(a). By contrast, in the case where temporal and spatial correlations are low, such as the case of water splash or white noises, motion vectors are arranged as shown in Fig. 22(b). In the case of Fig. 22(a), visual importance is high. By contrast, in the case of Fig. 22(b), visual importance is low.

(Embodiment 6)

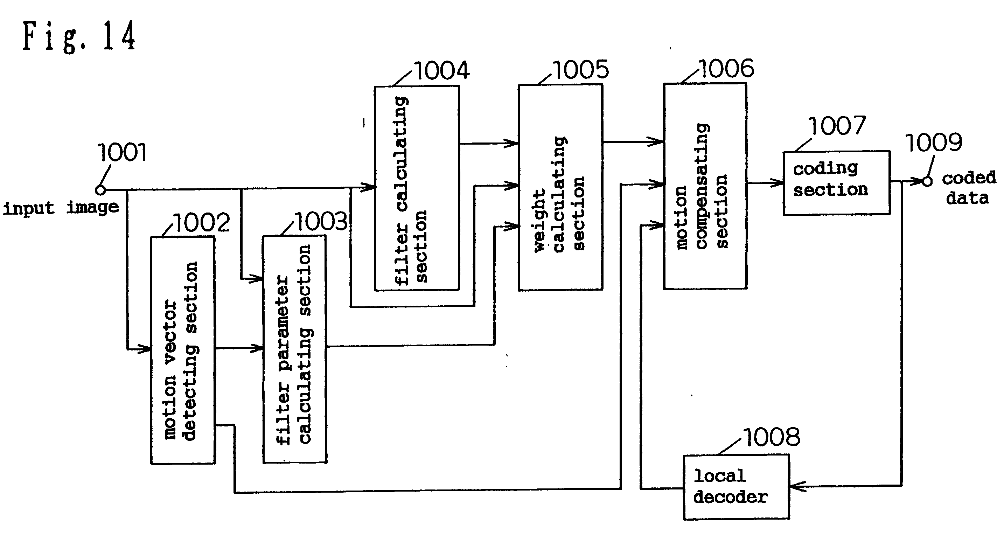

Hereinafter, Embodiment 6 of the invention will be described with reference to Figs. 14, 15, and 16.

In Fig. 14, 1001 denotes an inputting section, 1002 denotes a motion vector detecting section, 1003 denotes a filter parameter calculating section, 1004 denotes a filter calculating section, 1005 denotes a weight calculating section, 1006 denotes a motion compensating section, 1007 denotes a coding section, 1008 denotes a local decoder, and 1009 denotes an outputting section.

Next, the operation of the embodiment will be described.

An image signal which is input from the inputting section 1001 is input to the motion vector detecting section 1002, the filter parameter calculating section 1003, the filter calculating section 1004, and the weight calculating section 1005. Irrespective of the picture type of the input image, the motion vector detecting section 1002 performs motion vector detection on the input image with respect to a reference image stored in a memory, and outputs a motion vector and a first difference image. The motion vector is input to the motion compensating section 1006, and the first difference image is input to the filter parameter calculating section 1003.

The filter parameter calculating section 1003 calculates a first activity in the unit of block from the input image, and a second activity in the unit of block from the first difference image. From the first activity and the second activity, thereafter, visual importance which indicates the degree of visual importance in the unit of block with respect to the input image is calculated. From the visual importance, a filter parameter which is a parameter indicating the degree of filtering in the unit of pixel on the input image is calculated. The filter parameter is input to the weight calculating section 1005.

The filter calculating section 1004 performs a filter calculation on the input image with a specific filter coefficient, and outputs a first filter image. The first filter image is input to the weight calculating section 1005. The weight calculating section 1005 performs a weighting calculation based on the filter parameter on the first filter image, and outputs a second filter image. The second filter image is input to the motion compensating section 1006. When the picture type of the input filter image is a P-picture or a B-picture, the motion compensating section 1006 produces a predictive image from the input motion vector and the reference image stored in the memory, calculates the difference between the predictive image and the filter image, and outputs a second difference image. The second difference image is input to the coding section 1007. When the picture type of the input filter image is an I-picture, the filter image is deemed as a second difference signal, and input to the coding section 1007.

The coding section 1007 codes the input second difference image, and outputs a coded data. The coded data is input to the local decoder 1008 and the outputting section 1009. The local decoder 1008 decodes the input coded data and produces a decoded image. The decoded image is input to the motion compensating section 1006. The outputting section 1009 outputs the input coded data to recording and transmitting media or the like.

The operation of the filter parameter calculating section 1003 will be described in detail with reference to Figs. 15 and 16. First, with respect to the input image, an average value of pixel values in the unit of block is calculated. Differences between pixels in the block and the above-mentioned average value are calculated, and difference signals are produced. A sum of absolute values of the difference signal values is calculated, and the sum is set as the first activity. Next, with respect to the first difference image, a sum of absolute values of pixel values in the unit of block is calculated, and the sum is set as the second activity. A sum of absolute values of pixel values is used as the activity. Alternatively, in the same manner as Embodiment 5, variance of pixels in a block or the like may be used as the activity. From the first activity and the second activity, tB of the block is calculated by using the table of visual importance shown in Fig. 15.

For example, an arbitrary block b will be considered. When the first activity of the block b is 2,000 and the second activity is 1,000, tB of the block b is 0.7 from the table of Fig. 15. Thereafter, a filter parameter tP which is a parameter for controlling the degree of filtering in the unit of pixel is calculated from the visual importance tB. The calculation is performed by the following method. As shown in Fig. 16, tP of a pixel in a block is set to be tB of the block.

When tB in a certain block is 0.7, for example, tP is 0.7 in all of four pixels in the block. This tP is used as a weighting coefficient in a weighting calculation. Specifically, a weighting calculation in an arbitrary pixel p is performed as indicated by the following (Ex. 1).

$$\text{Value of the pixel p in the second filter image}$$
$$= (\text{tP} \times \text{value of the pixel p in the input image}) + ((1 - \text{tP}) \times \text{value of the pixel p in the first filter image}) \qquad \text{[Ex. 1]}$$

As described above, visual importance of the input image is calculated from the input image and the difference image, and a filter process is conducted on a region of lower visual importance, to reduce the information amount, whereby a larger code amount can be allocated to a region of higher visual importance, and the image quality can be improved.

(Embodiment 7)

Hereinafter, Embodiment 7 of the invention will be described with reference to Figs. 13, 15, and 16. The configuration is identical with that of Fig. 13, and the operation is identical with that of Embodiment 5. The filter coefficient determining section 904 in the embodiment calculates a filter coefficient from the filter parameter tP.

The embodiment and Embodiment 5 are different in the method of determining the filter coefficient. In Embodiment 5, a filter coefficient for each pixel is selected from plural filter coefficient candidates which are previously set, on the basis of the filter parameter. By contrast, in the embodiment, a filter coefficient is calculated from the filter parameter. According to this configuration, it is possible to use a filter having more suitable filter properties.

As described above, visual importance of the input image is calculated from the input image and the difference image, and a filter process is conducted on a region of lower visual importance, to reduce the information amount, whereby a larger code amount can be allocated to a region of higher visual importance, and the image quality can be improved.

(Embodiment 8)

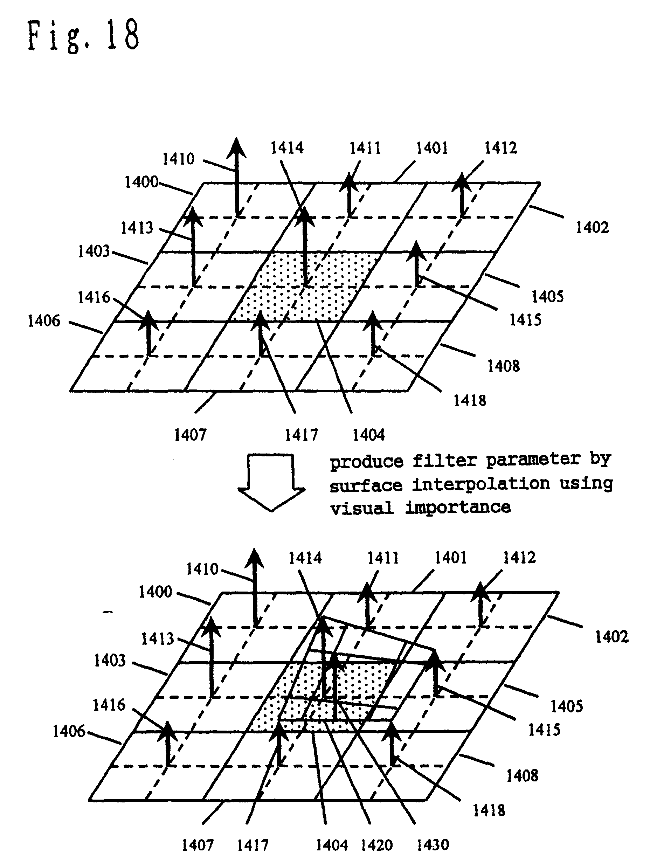

Hereinafter, Embodiment 8 of the invention will be described with reference to Figs. 13, 15, and 18. The configuration is identical with that of Fig. 13, and the operation is identical with that of Embodiment 5. The operation of the filter parameter calculating section 903 in the embodiment will be described with reference to Figs. 15 and 18.

The filter parameter calculating section 903 calculates tB from the first activity calculated from the input image and the second activity calculated from the first difference image, by using the visual importance table shown in Fig. 15. For example, an arbitrary block b will be considered. When the first activity of the block b is 2,000 and the second activity is 1,000, tB of the block b is 0.7 from the table of Fig. 15.

Thereafter, as shown in Fig. 18, curved surface interpolation is performed by using tB to calculate tP.

In Fig. 18, 1400 to 1408 denote blocks, and 1410 to 1418 denote block visual importance tB of each block. The values of the visual importance of the blocks are respectively as follows: 1410 has 0.7; 1411 has 0.5; 1412 has 0.5; 1413 has 0.7; 1414 has 0.7; 1415 has 0.5; 1416 has 0.5; 1417 has 0.5; and 1418 has 0.5. Furthermore, 1420 denotes a pixel in the block 1404, and 1430 denotes tP of the pixel 1420.

When the pixel 1420 will be considered, 1430 which is tP of the pixel 1420 is calculated by curved surface interpolation indicated by (Ex. 2) by using four tBs: 1414 which is tB of the block 1404, 1415 which is tB of the block 1405, 1417 which is tB of the block 1407, and 1418 which is tB of the block 1408.

$$\text{tP of the pixel 1420} = (0.75 \times (0.75 \times \text{tB of the block 1404} + 0.25 \times \text{tB of the block 1405}))$$
$$+ (0.25 \times (0.75 \times \text{tB of the block 1407} + 0.25 \times \text{tB of the block 1408})) \qquad \text{[Ex. 2]}$$

Substituting tB of the block 1404 = 0.7, tB of the block 1405 = 0.5, tB of the block 1407 = 0.5, and tB of the block 1408 = 0.5 into (Ex. 2), tP of the pixel 1420 is 0.6125. From the filter parameter tP, thereafter, the filter coefficient of the filter which is used for processing the pixel is determined by using the filter coefficient table shown in Fig. 17. When tP is 0.6125, for example, a filter coefficient is selected to be 3.

As described above, visual importance of the input image is calculated from the input image and the difference image, and a filter process is performed on a region of low visual importance, thereby reducing the information amount. As a result, a larger code amount can be allocated to a region of higher visual importance, and improvement of the image quality can be realized. A filter parameter in the unit of pixel is calculated by curved surface interpolation using visual importance which is calculated in the unit of block. Therefore, the continuity in a block interface can be maintained, and a visual improvement can be realized.

(Embodiment 9)

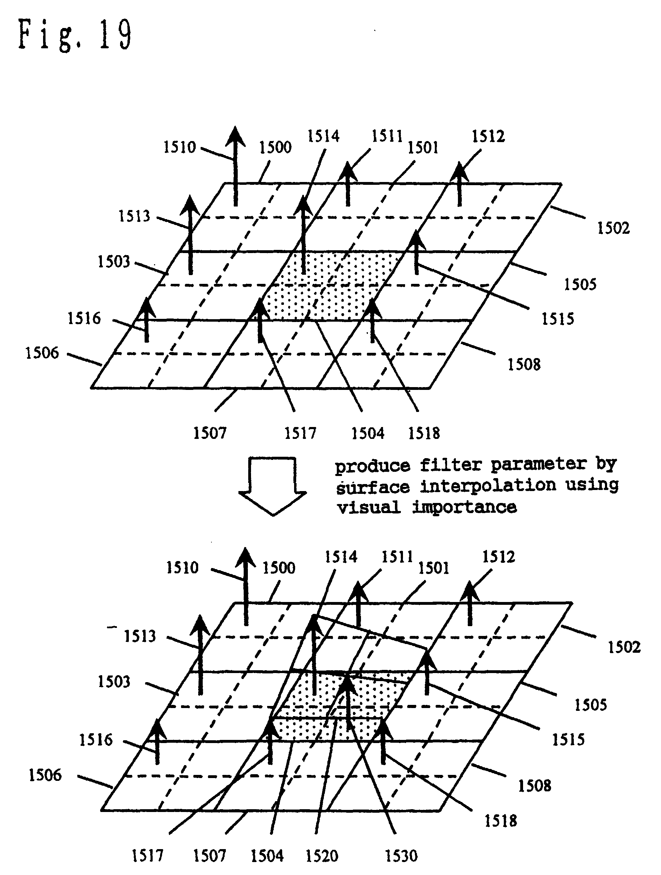

Hereinafter, Embodiment 9 of the invention will be described with reference to Figs. 13, 15, and 19. The configuration is identical with that of Fig. 13, and the operation is identical with that of Embodiment 5. The operation of the filter parameter calculating section 903 in the embodiment will be described with reference to Figs. 15 and 19.
The filter parameter calculating section 903 calculates tB from the first activity calculated from the input image and the second activity calculated from the first difference image, by using the visual importance table shown in Fig. 15. For example, an arbitrary block b will be considered. When the first activity of the block b is 2,000 and the second activity is 1,000, tB of the block b is 0.7 from the table of Fig. 15.
Thereafter, as shown in Fig. 19, curved surface interpolation is performed by using tB to calculate tP. At this time, tB is placed in one of four corners of the block. In Fig. 19, 1500 to 1508 denote blocks, and 1510 to 1518 denote visual importance tB of each block. The values of the visual importance of the blocks are respectively as follows: 1510 has 0.7; 1511 has 0.5; 1512 has 0.5; 1513 has 0.7; 1514 has 0.7; 1515 has 0.5; 1516 has 0.5; 1517 has 0.5; and 1518 has 0.5. Furthermore, 1520 denotes a pixel in the block 1504, and 1530 denotes tP of the pixel 1520.
When the pixel 1520 will be considered, 1530 which is tP of the pixel 1520 is calculated by curved surface interpolation indicated by (Ex. 3) by using four tBs: 1514 which is tB of the block 1504, 1515 which is tB of the block 1505, 1517 which is tB of the block 1507, and 1518 which is tB of the block 1508.

$$\text{tP of the pixel 1520} = (0.5 \times (0.5 \times \text{tB of the block 1504} + 0.5 \times \text{tB of the block 1505}))$$
$$+ (0.5 \times (0.5 \times \text{tB of the block 1507} + 0.5 \times \text{tB of the block 1508})) \qquad \text{[Ex. 3]}$$

Substituting tB of the block 1504 = 0.7, tB of the block 1505 = 0.5, tB of the block 1507 = 0.5, and tB of the block 1508 = 0.5 into (Ex. 3), tP of the pixel 1520 is 0.55. Thereafter, the filter coefficient of the filter which is used for processing the pixel is determined by using the filter coefficient table shown in Fig.17. When tP is 0.55, for example, a filter coefficient is selected to be 3.
As described above, visual importance of the input image is calculated from the input image and the difference image, and a filter process is performed on a region of lower visual importance, thereby reducing the information amount. As a result, a larger code amount can be allocated to a region of higher visual importance, and improvement of the image quality can be realized. In curved surface interpolation using visual importance which is calculated in the unit of block, the visual importance is placed in one of four corners of a block, whereby the calculation accuracy of the interpolation calculation can be reduced as compared with the case where visual importance is placed at the center of a block. Therefore, a reduction of circuits in the calculation section can be realized. Furthermore, the continuity in a block interface can be maintained by curved surface interpolation, and a visual improvement can be realized.

(Embodiment 10)

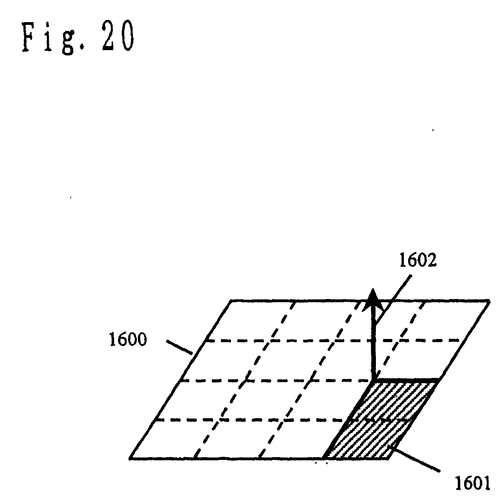

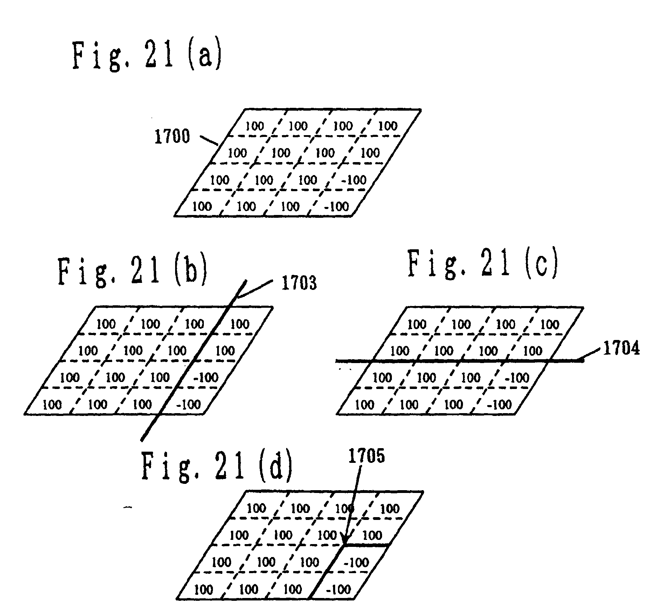

Hereinafter, Embodiment 10 of the invention will be described with reference to Figs. 13, 15, 20 and 21. The configuration is identical with that of Fig. 13, and the operation is identical with that of Embodiment 5. The operation of the filter parameter calculating section 903 in the embodiment will be described with reference to Figs. 15, 20 and 21. The embodiment will be described with assuming that each block has a size of $4 \times 4$ pixels.
The filter parameter calculating section 903 calculates tB from the first activity calculated from the input image and the second activity calculated from the first difference image, by using the visual importance table shown in Fig. 15.
Thereafter, edge detection is performed on each of the blocks. If it is judged that there is an edge, tB is placed in the edge interface. Fig. 20 shows the placement of tB in the case where there is an edge in a block. In Fig. 20, 1600 denotes a block containing an edge region 1601, and 1602 denotes tB which is calculated with respect to the block 1600. As shown in Fig. 20, tB 1602 is placed in the edge interface. The edge detection is performed in the procedure shown in Fig. 21. In Fig. 21(a), 1700 denotes a block consisting of $4 \times 4$ pixels, and designations of 100 and 100 indicate pixel values of pixels. Accordingly, in the block 1700, there are fourteen pixels of a pixel value of 100, and two pixels of a pixel value of 100. Edge detections in the horizontal and vertical directions are independently performed on the block 1700. First, with respect to the horizontal direction, a position where the absolute value of the difference between adjacent pixels exceeds a specific threshold value = 100 and is the largest is regarded as the horizontal edge interface. Results are shown in Fig. 21(b). In Fig. 21(b), 1703 denotes the horizontal edge interface. With respect to the vertical direction, thereafter, in the same manner as the horizontal direction, a position where the absolute value of the difference between adjacent pixels exceeds a threshold value = 100 and is the largest is regarded as the vertical edge interface. Results are shown in Fig. 21(c). In Fig. 21(c), 1704 denotes the vertical edge interface. The edge interface of the block 1700 is detected from the horizontal edge interface and the vertical edge interface. Results are shown in Fig. 21(d). In Fig. 21(d), 1705 denotes the edge interface of the block 1700, and tB 1602 of the block 1700 is placed on the edge interface 1705.

As described above, visual importance of the input image is calculated from the input image and the difference image, and a filter process is performed on a region of low er visual importance, thereby reducing the information amount. As a result, a larger code amount can be allocated to a region of higher visual importance, and improvement of the image quality can be realized. In curved surface interpolation using visual importance, the visual importance is placed in an interface of an edge in a block, whereby the edge can be preserved, and an improvement of the image quality can be realized. Furthermore, the continuity in a block interface can be maintained by curved surface interpolation, and a visual improvement can be realized.

(Embodiment 11)

Hereinafter, Embodiment 11 of the invention will be described with reference to Fig. 13. The configuration is identical with that of Fig. 13, and the operation is identical with that of Embodiment 5. In the embodiment, irrespective of the picture type of the input image, the motion vector detecting section 902 performs the same motion vector detection to produce the first difference image. At this time, the motion vector outputs a motion vector corresponding to the picture type.

The embodiment and Embodiment 5 are different from each other in the method of calculating the first difference image. In Embodiment 5, when the first difference image is to be calculated, forward prediction is performed on an I- or P-picture, and bidirectional prediction is performed on a B-picture, or the motion detection is performed in accordance with each picture type. By contrast, in the embodiment, the same motion detection is performed to produce the first difference image, irrespective of the picture type of the input image. As described above, irrespective of the picture correspondence of the input image, the same motion vector detection is performed to produce the first difference image, whereby visual importance can be detected at a higher accuracy, and an improvement of the image quality of a reproduced image can be realized.

(Embodiment 12)

Hereinafter, Embodiment 12 of the invention will be described with reference to Fig. 13. The configuration is identical with that of Fig. 13, and the operation is identical with that of Embodiment 5. In the embodiment, irrespective of the picture type of the input image, the motion vector detecting section 902 performs motion vector detection in the unit of block on the input image with respect to a reference image stored in a memory, and outputs a motion vector and a first difference image. Moreover, an activity in the original image state is compared with that in the difference image, it is determined which one of intraframe coding or interframe coding is to be performed on the block, and block type information indicative of information of the coding method is output. The motion vector is input to the motion compensating section 906. The block type information is input to the filter parameter calculating section 903 and the motion compensating section 906. The first difference image is input to the filter parameter calculating section 903.

The filter parameter calculating section 903 calculates a first activity in the unit of block from the input image, and a second activity in the unit of block from the first difference image. From the first activity and the second activity, and the block type information, thereafter, visual importance which indicates the degree of visual importance in the unit of blockwith respect to the input image is calculated. For a block in which intraframe coding is selected, for example, its visual importance is set to be 1. Further, from the visual importance, a filter parameter which is a parameter for controlling the degree of filtering in the unit of pixel with respect to the input image is calculated. The filter parameter is input to the filter coefficient determining section 904.

The filter coefficient determining section 904 determines a filter coefficient from the input filter parameter. The filter coefficient is input to the filter calculating section 905. The filter calculating section 905 performs a filter calculation on the input image by using the input filter coefficient, to produce a filter image. The filter image is input to the motion compensating section 906. When the picture type of the input filter image is a P-picture or a B-picture, the motion compensating section 906 produces a predictive image from the input motion vector, the reference image stored in the memory, and the block type information, calculates the difference between the predictive image and the filter image, and outputs a second difference image. The second difference image is input to the coding section 907. When the picture type of the input filter image is an I-picture, the filter image is deemed as a second difference signal, and input to the coding section 907. The coding section 907 codes the input second difference image, and outputs a coded data. The coded data is input to the local decoder 908 and the outputting section 909.

As described above, visual importance of the input image is calculated from the input image and the difference image, and a filter process is performed on a region of lower visual importance, thereby reducing the information amount. As a result, a larger code amount can be allocated to a region of higher visual importance, and improvement of the image quality can be realized.

The means constituting the video signal coding apparatus of each of above-described Embodiments 5 to 12 may be configured as hardware, or may be replaced with software having the same functions as corresponding ones of the above-mentioned hardware.

Industrial Applicability

As apparent from the above description, the invention can provide a video signal coding method which codes a bit stream before transformation so that the code amount of the transformed bit stream can be set within a predetermined code amount, and also an apparatus for the same.

**Claims**

1. A video signal coding method in which an input digital video signal is coded by using discrete cosine transform, quantization, and variable length coding, characterized in that

   in the quantization, quantization is performed while selecting a quantizer which enables N kinds (N ≥ 2) of code amounts to be equal to or smaller than a predetermined code amount, the code amounts being obtained by applying N kinds of variable length codings on the discrete cosine transformed input digital video signal.

2. A video signal coding apparatus characterized in that said apparatus comprises:

   orthogonal transforming means for performing discrete cosine transform on an input digital video signal to produce a transformed signal;
   quantization estimating means for selecting a quantizer which enables N kinds (N ≥ 2) of code amounts to be equal to or smaller than a predetermined code amount, the code amounts being obtained by applying quantization and N kinds of variable length codings on the transformed signal;
   quantizing means for quantizing the transformed signal to produce a quantized signal, by using said quantizer which is selected by said quantization estimating means; and
   variable length coding manes for applying one of the N kinds of variable length codings which are used in said quantization estimating means, on the quantized signal.

3. A video signal coding apparatus according to claim 2, characterized in that the input digital video signal is a video signal which is previously divided into predetermined coding units, and

   said quantization estimating means selects a quantizer for each of the coding units.

4. A video signal coding method in which an input digital video signal is coded by using discrete cosine transform, quantization, and first variable length coding, to produce a first bit stream that can be transformed to a second bit stream by using decoding of the first variable length coding, difference predictive coding, and second variable length coding, characterized in that

   in the quantization, quantization is performed while selecting a quantizer which enables both code amounts that are obtained by applying the first and second variable length codings on AC components of the discrete cosine transformed input digital video signal, to be equal to or smaller than a differential code amount that is obtained by subtracting, from a predetermined code amount, a maximum DC code amount which is a larger one among a predictive code amount which is obtained by performing difference predictive coding on DC components of the discrete cosine transformed input digital video signal, and a fixed code amount in the case where the DC components are set to a fixed length.

5. A video signal coding method in which an input digital video signal is coded by using discrete cosine transform, difference predictive coding, quantization, and first variable length coding, to produce a first bit stream that can be transformed to a second bit stream by using decoding of the first variable length coding, decoding of the difference predictive coding, and second variable length coding, characterized in that

   in the quantization, quantization is performed while selecting a quantizer which enables both code amounts that are obtained by applying the first and second variable length codings on AC components of the discrete cosine transformed input digital video signal, to be equal to or smaller than a differential code amount that is obtained by subtracting, from a predetermined code amount, a maximum DC code amount which is a larger one among a predictive code amount which is obtained by performing difference predictive coding on DC components of the discrete cosine transformed input digital video signal, and a fixed code amount in the case where the DC components are set to a fixed length.

6. A video signal coding apparatus characterized in that said apparatus comprises:

orthogonal transforming means for performing discrete cosine transform on an input digital video signal to produce a transformed signal;
code amount estimating means for setting a larger one among a difference predictive code amount which is obtained by performing difference predictive coding on DC components of the discrete cosine transformed input digital video signal, and a fixed code amount in the case where the DC components are set to a fixed length, as a DC estimated code amount;
quantization estimating means for selecting a quantizer which enables N kinds (N ≥ 2) of code amounts to be equal to or smaller than a differential code amount which is obtained by subtracting the DC estimated code amount from a predetermined code amount, the code amounts being obtained by applying quantization and N kinds of variable length codings on AC components of the transformed signal;
quantizing means for quantizing the AC components of the transformed signal to produce a quantized signal, by using said quantizer which is selected by said quantization estimating means; and
variable length coding manes for applying one of the N kinds of variable length codings which are used in said quantization estimating means, on the quantized signal.

7. A video signal coding apparatus characterized in that said apparatus comprises:

orthogonal transforming means for performing discrete cosine transform on an input digital video signal to produce a transformed signal;
predictive differential coding means for performing predictive differential coding on DC components of the discrete cosine transformed input digital video signal, and setting a code amount produced in the predictive differential coding, as a difference predictive code amount;
code amount estimating means for setting a larger one among the difference predictive code amount, and a fixed code amount in the case where the DC components are set to a fixed length, as a DC estimated code amount;
quantization estimating means for selecting a quantizer which enables N kinds (N ≥ 2) of code amounts to be equal to or smaller than a differential code amount which is obtained by subtracting the DC estimated code amount from a predetermined code amount, the code amounts being obtained by applying quantization and N kinds of variable length codings on AC components of the transformed signal;
quantizing means for quantizing the AC components of the transformed signal to produce a quantized signal, by using said quantizer which is selected by said quantization estimating means; and
variable length coding manes for applying one of the N kinds of variable length codings which are used in said quantization estimating means, on the quantized signal.

8. A video signal coding apparatus characterized in that said apparatus comprises:

code amount estimating means for, for each of predetermined blocks of an input digital video signal, obtaining an average value of pixels in the block, setting the average value as a value of DC components which are obtained by performing discrete cosine transform on the digital video signal, and setting a larger one among a difference predictive code amount which is obtained by performing difference predictive coding on the DC components, and a fixed code amount in the case where the DC components are set to a fixed length, as a DC estimated code amount;
orthogonal transforming means for performing discrete cosine transform on the digital video signal for each of the blocks to produce a transform coding unit;
quantization estimating means for selecting a quantizer which enables N kinds (N ≥ 2) of code amounts to be equal to or smaller than a differential code amount which is obtained by subtracting the DC estimated code amount from a predetermined code amount, the code amounts being obtained by applying quantization and N kinds of variable length codings on AC components of the transformed signal;
quantizing means for quantizing the AC components of the transformed signal to produce a quantized signal, by using said quantizer which is selected by said quantization estimating means; and

variable length coding manes for applying one of the N kinds of variable length codings which are used in said quantization estimating means, on the quantized signal.

9.  A video signal coding apparatus according to any one of claims 6 to 8, characterized in that the input digital video signal is a video signal which is previously divided into predetermined coding units, and

    said quantization estimating means selects a quantizer for each of the coding units.

10. A video signal coding apparatus according to claim 9, characterized in that the difference predictive code amount of the DC components is a difference between a predetermined code amount, and an average value of pixels of a block in the coding unit within the DC estimated code amount.

11. A video signal coding method in which an input digital video signal is coded by using discrete cosine transform, quantization, and first variable length coding, and first additional information is added to produce a first bit stream that can be transformed to a second bit stream by using decoding of the first variable length coding, and second variable length coding, and adding second additional information, characterized in that

    in the quantization, quantization is performed while selecting a quantizer which enables both code amounts that are obtained by applying the first and second variable length codings on AC components of the discrete cosine transformed digital video signal, to be equal to or smaller than a differential code amount that is obtained by subtracting, from a predetermined code amount, a maximum additional information amount which is a larger one among information amounts of the first and second additional information.

12. A video signal coding apparatus characterized in that said apparatus comprises:

    orthogonal transforming means for performing discrete cosine transform on an input digital video signal to produce a transformed signal;
    additional information estimating means for detecting a maximum additional information amount which is a larger one among a code amount of first additional information that is to be attached to a first bit stream which is obtained by applying first variable length coding on the transformed signal, and a code amount of second additional information that is to be attached to a second bit stream which is obtained by applying second variable length coding on the transformed signal;
    quantization estimating means for selecting a quantizer which enables both a code amount that is obtained by applying quantization and the first variable length coding on the transformed signal, and a code amount that is obtained by applying quantization and the second variable length coding on the transformed signal, to be equal to or smaller than a differential code amount that is obtained by subtracting the maximum additional information amount from a predetermined code amount;
    quantizing means for quantizing the transformed signal to produce a quantized signal, by using said quantizer which is selected by said quantization estimating means; and
    variable length coding manes for applying the first or second variable length coding on the quantized signal.

13. A video signal coding apparatus according to claim 12, characterized in that the input digital video signal is a video signal which is previously divided into predetermined coding units, and

    said quantization estimating means selects a quantizer for each of the coding units.

14. A video signal coding apparatus according to claim 13, characterized in that the differential code amount is a difference between an average additional information amount which is obtained by dividing the maximum additional information amount by a number of the coding units in the input digital video signal, and the predetermined code amount.

15. A video signal coding method in which an input digital video signal is coded by using discrete cosine transform, quantization, and first variable length coding, and first additional information is added to produce a first bit stream that can be transformed to a second bit stream by using decoding of the first variable length coding, and second variable length coding, and adding the first additional information with changing to second additional information, characterized in that

    in the quantization, quantization is performed while selecting a quantizer which enables both code amounts that are obtained by applying the first and second variable length codings on AC components of the discrete cosine transformed digital video signal, to be equal to or smaller than a differential code amount that is obtained by subtracting, from a predetermined code amount, a maximum additional information amount which is a larger one of information amounts of the first and second additional information, and a maximum DC code amount which is a larger one of a predictive code amount which is obtained by performing difference predictive coding on DC components of the discrete cosine transformed input digital video signal, and a fixed code amount in the case where the DC components are set to a fixed length.

16. A video signal coding method in which an input digital video signal is coded by using discrete cosine transform, difference predictive coding, quantization, and first variable length coding, and first additional information is added to produce a first bit stream that can be transformed to a second bit stream by using decoding of the first variable length coding, decoding of the difference predictive coding, and second variable length coding, and adding the first additional information with changing to second additional information, characterized in that

in the quantization, quantization is performed while selecting a quantizer which enables both code amounts that are obtained by applying the first and second variable length codings on AC components of the discrete cosine transformed digital video signal, to be equal to or smaller than a differential code amount that is obtained by subtracting, from a predetermined code amount, a maximum additional information amount which is a larger one of information amounts of the first and second additional information, and a maximum DC code amount which is a larger one among a predictive code amount which is obtained by performing difference predictive coding on DC components of the discrete cosine transformed input digital video signal, and a fixed code amount in the case where the DC components are set to a fixed length.

17. A video signal coding apparatus characterized in that said apparatus comprises:

orthogonal transforming means for performing discrete cosine transform on an input digital video signal to produce a transformed signal;
code amount estimating means for setting a larger one of a difference predictive code amount which is obtained by performing difference predictive coding on DC components of the discrete cosine transformed input digital video signal, and a fixed code amount in the case where the DC components are set to a fixed length, as a DC estimated code amount;
additional information estimating means for detecting a maximum additional information amount which is a larger one among a code amount of first additional information that is to be attached to a first bit stream which is obtained by applying first variable length coding on the transformed signal, and a code amount of second additional information that is to be attached to a second bit stream which is obtained by applying second variable length coding on the transformed signal;
quantization estimating means for selecting a quantizer which enables both a code amount that is obtained by applying quantization and the first variable length coding on AC components of the transformed signal, and a code amount that is obtained by applying quantization and the second variable length coding on the AC components of the transformed signal, to be equal to or smaller than a differential code amount that is obtained by subtracting the DC estimated code amount and the maximum additional information amount from a predetermined code amount;
quantizing means for quantizing AC components of the transformed signal to produce a quantized signal, by using said quantizer which is selected by said quantization estimating means; and
variable length coding manes for applying the first or second variable length coding on the quantized signal.

18. A video signal coding apparatus characterized in that said apparatus comprises:

orthogonal transforming means for performing discrete cosine transform on an input digital video signal to produce a transformed signal;
predictive coding means for performing difference predictive coding on DC components of the discrete cosine transformed input digital video signal, and obtaining a difference predictive code amount;
code amount estimating means for setting a larger one of the difference predictive code amount, and a fixed code amount in the case where the DC components are set to a fixed length, as a DC estimated code amount;
additional information estimating means for detecting a maximum additional information amount which is a larger one of a code amount of first additional information that is to be attached to a first bit stream which is obtained by applying first variable length coding on the transformed signal, and a code amount of second additional information that is to be attached to a second bit stream which is obtained by applying second variable length coding on the transformed signal;

quantization estimating means for selecting a quantizer which enables both a code amount that is obtained by applying quantization and the first variable length coding on AC components of the transformed signal, and a code amount that is obtained by applying quantization and the second variable length coding on the AC components of the transformed signal, to be equal to or smaller than a differential code amount that is obtained by subtracting DC estimated code amount and the maximum additional information amount from a predetermined code amount;

quantizing means for quantizing AC components of the transformed signal to produce a quantized signal, by using said quantizer which is selected by said quantization estimating means; and

variable length coding manes for applying the first or second variable length coding on the quantized signal.

19. A video signal coding apparatus characterized in that said apparatus comprises:

code amount estimating means for, for each of predetermined blocks of an input digital video signal, obtaining an average value of pixels in the block, setting the average value as a value of DC components which are obtained by performing discrete cosine transform on the digital video signal, and setting a larger one of a difference predictive code amount which is obtained by performing difference predictive coding on the DC components, and a fixed code amount in the case where the DC components are set to a fixed length, as a DC estimated code amount;

orthogonal transforming means for performing discrete cosine transform on the digital video signal for each of the blocks to produce a transform coding unit;

additional information estimating means for detecting a maximum additional information amount which is a larger one among a code amount of first additional information that is to be attached to a first bit stream which is obtained by applying first variable length coding on the transform coding unit, and a code amount of second additional information that is to be attached to a second bit stream which is obtained by applying second variable length coding on the transform coding unit;

quantization estimating means for selecting a quantizer which enables both a code amount that is obtained by applying quantization and the first variable length coding on AC components of the transform coding unit, and a code amount that is obtained by applying quantization and the second variable length coding on the AC components of the transform coding unit, to be equal to or smaller than a differential code amount that is obtained by subtracting the DC estimated code amount and the maximum additional information amount from a predetermined code amount;

quantizing means for quantizing the AC components of the transform coding unit to produce a quantized signal, by using said quantizer which is selected by said quantization estimating means; and

variable length coding manes for applying the first or second variable length coding on the quantized signal.

20. A video signal coding apparatus according to any one of claims 17 to 19, characterized in that the input digital video signal is a video signal which is previously divided into predetermined coding units, and

said quantization estimating means selects a quantizer for each of the coding units.

21. A video signal coding apparatus according to claim 20, characterized in that the difference predictive code amount of the DC components is a difference obtained by subtracting, from the predetermined code amount, the DC estimated code amount for a block in the coding units, and an average additional information amount which is obtained by dividing the maximum additional information amount by a number of the coding units in the input digital video signal.

22. A video signal coding method in which an input digital video signal is coded by a first system that uses discrete cosine transform, quantization, and first variable length coding, to produce a first bit stream that can be transformed to a second bit stream which is coded by a second system by using decoding of the first variable length coding, difference predictive coding, and second variable length coding, characterized in that

when a quantizer for the quantization is to be selected,

a second system code amount in the case where the difference predictive coding and the second variable length coding are performed on a digital video signal which is discrete cosine transformed and quantized previously in time to a discrete cosine transformed input digital video signal which is the object of the quantization is compared with a preset ideal code amount at the second system, and

when the second system code amount is equal to or smaller than the ideal code amount, a quantizer which performs coding at a first target code amount that is previously determined in the first system is selected, and when the second system code amount is larger than the ideal code amount, a quantizer which performs coding at a code amount that is smaller than the first target code amount is selected.

23. A video signal coding method in which an input digital video signal is coded by using discrete cosine transform, difference predictive coding, quantization, and first variable length coding to produce a first bit stream that can be transformed to a second bit stream by using decoding of the first variable length coding, decoding of the difference predictive coding, and second variable length coding, characterized in that

when a quantizer for the quantization is to be selected,
a second system code amount in the case where the difference predictive coding and the second variable length coding are performed on a digital video signal which is discrete cosine transformed, difference predictive coded, and quantized previously in time to a discrete cosine transformed input digital video signal which is the object of the quantization
is compared with a preset ideal code amount of the second system, and
when the second system code amount is equal to or smaller than the ideal code amount, a quantizer which performs coding at a first target code amount that is previously determined in the first system is selected, and when the second system code amount is larger than the ideal code amount, a quantizer which performs coding at a code amount that is smaller than the first target code amount is selected.

24. A video signal coding method according to claim 22 or 23, characterized in that the ideal code amount is stepwise increased by a substantially constant value with the passage of time.

25. A video signal coding method according to any one of claims 22 to 24, characterized in that, when the second system code amount is larger than the ideal code amount, a quantizer which performs coding at a code amount that is obtained by subtracting a difference between the second system code amount and the ideal code amount from the first target code amount is selected.

26. A video signal coding method according to any one of claims 22 to 25, characterized in that the digital video signal which is discrete cosine transformed, and quantized previously in time means a predetermined partial signal which is previous to the discrete cosine transformed input digital video signal which is the object of the quantization.

27. A video signal coding apparatus in which an input digital video signal is coded by a first system that uses discrete cosine transform, quantization, and first variable length coding, to produce a first bit stream that can be transformed to a second bit stream which is coded by a second system by using decoding of the first variable length coding, difference predictive coding, and second variable length coding, characterized in that

said apparatus comprises:
orthogonal transforming means for performing discrete cosine transform on the input digital video signal to produce a transformed signal;
quantizing means for quantizing the transformed signal to produce a quantized signal;
DC component code amount estimating means for estimating a difference predictive code amount in the case where the difference predictive coding is performed on DC components of a digital video signal which is discrete cosine transformed and quantized previously in time to the transformed signal which is the object of the quantization in said quantizing means;
second-system code amount estimating means for estimating a second system code amount which is a total of the difference predictive code amount, and a code amount in the case where the second variable length coding is performed on AC components of the digital video signal which is discrete cosine transformed and quantized previously in time; quantization estimating means for comparing the second system code amount with a preset ideal code amount of the second system, and, when the second system code amount is equal to or smaller than the ideal code amount, selecting a quantizer which performs coding at a first target code amount that is previously determined in the first system, and, when the second system code amount is larger than the ideal code amount, selecting a quantizer which performs coding at a code amount that is smaller than the first target code amount; and
variable length coding means for applying the first variable length coding on the quantized signal, and wherein said quantizing means quantizes AC components of the transformed signal which is an object of the quantization, by using said quantizer which is selected by said quantization estimating means, thereby producing the quantized signal.

28. A video signal coding apparatus in which an input digital video signal is coded by using discrete cosine transform, difference predictive coding, quantization, and first variable length coding to produce a first bit stream that can be transformed to a second bit stream by using decoding of the first variable length coding, decoding of the difference predictive coding, and second variable length coding, characterized in that

said apparatus comprises:
orthogonal transforming means for performing discrete cosine transform on the input digital video signal to produce a transformed signal;
quantizing means for quantizing the transformed signal to produce a quantized signal;
DC component code amount estimating means for estimating a DC code amount in the case where the difference predictive coding is performed on DC components of a digital video signal which is discrete cosine transformed, difference predictive coded, and quantized previously in time to the transformed signal which is the object of the quantization in said quantizing means;
second-system code amount estimating means for estimating a second system code amount which is a total of the DC code amount, and a code amount in the case where the second variable length coding is performed on AC components of the digital video signal which is discrete cosine transformed, difference predictive coded, and quantized previously in time;
quantization estimating means for comparing the second system code amount with a preset ideal code amount of the second system, and, when the second system code amount is equal to or smaller than the ideal code amount, selecting a quantizer which performs coding at a first target code amount that is previously determined in the first system, and, when the second system code amount is larger than the ideal code amount, selecting a quantizer which performs coding at a code amount that is smaller than the first target code amount; and
variable length coding means for applying the first variable length coding on the quantized signal, and wherein said quantizing means quantizes AC components of the transformed signal which is an object of the quantization, by using said quantizer which is selected by said quantization estimating means, thereby producing the quantized signal.

29. A video signal coding apparatus according to claim 27 or 28, characterized in that the ideal code amount is stepwise increased by a substantially constant value with the passage of time.

30. A video signal coding apparatus according to any one of claims 27 to 29, characterized in that, when the second system code amount is larger than the ideal code amount, said quantization estimating means selects a quantizer which performs coding at a code amount that is obtained by subtracting a difference between the second system code amount and the ideal code amount from the first target code amount.

31. A video signal coding apparatus according to any one of claims 27 to 30, characterized in that the digital video signal which is discrete cosine transformed and quantized previously in time means a predetermined partial signal which is previous to the discrete cosine transformed input digital video signal which is the object of the quantization.

32. A video signal coding method in which an input digital video signal is coded by using discrete cosine transform, quantization, and first variable length coding, and first additional information is added to produce a first bit stream that can be transformed to a second bit stream by using decoding of the first variable length coding, difference predictive coding, and second variable length coding, and adding the first additional information with changing to second additional information, characterized in that

in the quantization, quantization is performed while selecting a quantizer which enables both code amounts that are obtained by applying the first and second variable length codings on AC components of the discrete cosine transformed digital video signal, to be equal to or smaller than a differential code amount that is obtained by subtracting, from a predetermined code amount, a larger one among a first total in which a fixed code amount in the case where DC components of the discrete cosine transformed input digital video signal are set to a fixed length is added to an information amount of the first additional information, and a second total in which a difference predictive code amount which is obtained by performing difference predictive coding on DC components of the discrete cosine transformed input digital video signal is added to an information amount of the second additional information.

33. A video signal coding method in which an input digital video signal is coded by using discrete cosine transform, difference predictive coding, quantization, and first variable length coding, and first additional information is added to produce a first bit stream that can be transformed to a second bit stream by using decoding of the first variable length coding, decoding of the difference predictive coding, and second variable length coding, and adding the first additional information with changing to second additional information, characterized in that

in the quantization, quantization is performed while selecting a quantizer which enables both code amounts that are obtained by applying the first and second variable length codings on AC components of the discrete cosine transformed digital video signal, to be equal to or smaller than a differential code amount that is obtained by subtracting, from a predetermined code amount, a larger one among a first total in which a difference predictive code amount which is obtained by performing difference predictive coding on DC components of the discrete cosine transformed input digital video signal is added to an information amount of the first additional information, and a second total in which a fixed code amount in the case where DC components of the discrete cosine transformed input digital video signal are set to a fixed length is added to an information amount of the second additional information.

**34.** A video signal coding apparatus characterized in that said apparatus comprises:

orthogonal transforming means for performing discrete cosine transform on an input digital video signal to produce a transformed signal;

first detecting means for detecting a first total amount of a fixed code amount in the case where DC components of the transformed signal are set to a fixed length, and a code amount of first additional information that is to be attached to a first bit stream which is obtained by applying first variable length coding on the transformed signal;

second detecting means for detecting a second total amount of a difference predictive code amount which is obtained by performing difference predictive coding on the DC components of the transformed signal, and a code amount of second additional information that is to be attached to a second bit stream which is obtained by applying second variable length coding on the transformed signal;

quantization estimating means for selecting a quantizer which enables both a code amount that is obtained by applying quantization and the first variable length coding on AC components of the transformed signal, and a code amount that is obtained by applying quantization and the second variable length coding on the AC components of the transformed signal, to be equal to or smaller than a differential code amount that is obtained by subtracting a larger one among the first total amount and the second total amount from a predetermined code amount;

quantizing means for quantizing the AC components of the transformed signal to produce a quantized signal, by using said quantizer which is selected by said quantization estimating means; and

variable length coding manes for applying the first or second variable length coding on the quantized signal.

**35.** A video signal coding apparatus characterized in that said apparatus comprises:

orthogonal transforming means for performing discrete cosine transform on an input digital video signal to produce a transformed signal;

predictive coding means for performing difference predictive coding on DC components of the discrete cosine transformed input digital video signal, and obtaining a difference predictive code amount;

first detecting means for detecting a first total amount of the difference predictive code amount, and a code amount of first additional information that is to be attached to a first bit stream which is obtained by applying first variable length coding on the transformed signal;

second detecting means for detecting a second total amount of a fixed code amount in the case where DC components of the transformed signal are set to a fixed length, and a code amount of second additional information that is to be attached to a second bit stream which is obtained by applying second variable length coding on the transformed signal;

quantization estimating means for selecting a quantizer which enables both a code amount that is obtained by applying quantization and the first variable length coding on AC components of the transformed signal, and a code amount that is obtained by applying quantization and the second variable length coding on the AC components of the transformed signal, to be equal to or smaller than a differential code amount that is obtained by subtracting a larger one among the first total amount and the second total amount from a predetermined code amount;

quantizing means for quantizing the AC components of the transformed signal to produce a quantized signal, by using said quantizer which is selected by said quantization estimating means; and

variable length coding manes for applying the first or second variable length coding on the quantized signal.

**36.** A video signal coding apparatus characterized in that said apparatus comprises:

motion vector detecting means for, for an input image, detecting a motion vector with respect to a predetermined reference image;

difference image producing means for, for the input image, producing a first difference image with respect to the reference image;

filter coefficient determining means for calculating visual importance of the input image on the basis of the input image and the first difference image, and determining a filter coefficient for performing a filter process on the input image;

filter processing means for performing a filter process on the input image by using the filter coefficient, to produce a filter image;

motion compensating means for performing motion compensation on the filter image by using the motion vector, to produce a second difference image; and

coding means for performing coding on the second difference image to produce a coded data.

**37.** A video signal coding apparatus according to claim 36, characterized in that said filter coefficient determining means calculates visual importance of the input image on the basis of an activity of the input image and an activity of the first difference image, and determines the filter coefficient.

**38.** A video signal coding apparatus according to claim 36 or 37, characterized in that said filter coefficient determining means selects the filter coefficient for performing the filter process, from a plurality of filter coefficient candidates.

**39.** A video signal coding apparatus characterized in that said apparatus comprises:

motion vector detecting means for, for an input image, detecting a motion vector with respect to a predetermined reference image;

difference image producing means for, for the input image, producing a first difference image with respect to the reference image;

first filter processing means for performing a first filter process on the input image to produce a first filter image;

filter parameter determining means for calculating visual importance of the input image on the basis of the input image and the first difference image, and determining a filter parameter for performing a second filter process on the input image and the first filter image;

second filter processing means for performing a second filter process on the input image and the first filter image by using the filter parameter, to produce a second filter image;

motion compensating means for performing motion compensation on the second filter image by using the motion vector, to produce a second difference image; and

coding means for performing coding on the second difference image to produce a coded data.

**40.** A video signal coding apparatus according to claim 39, characterized in that said filter parameter determining means calculates the visual importance on the basis of an activity of the input image and an activity of the first difference image, and determines the filter parameter.

**41.** A video signal coding apparatus according to claim 39 or 40, characterized in that said filter parameter determining means selects the filter parameter for performing the second filter process, from a plurality of filter parameter candidates.

**42.** A video signal coding apparatus according to any one of claims 36 to 41, characterized in that the filter coefficient or the filter parameter is a coefficient in the predetermined unit of block.

**43.** A video signal coding apparatus according to any one of claims 36 to 41, characterized in that the filter coefficient or the filter parameter is a coefficient in the unit of pixel.

**44.** A video signal coding apparatus according to any one of claims 36 to 43, characterized in that said filter coefficient determining means or said filter parameter determining means determines the filter coefficient or the filter parameter by curved surface approximation using the visual importance.

**45.** A video signal coding apparatus according to any one of claims 36 to 43, characterized in that said filter coefficient determining means or said filter parameter determining means places the visual importance at one of four corners in a block constituting the input image, and determines the filter coefficient or the filter parameter while.

46. A video signal coding apparatus according to any one of claims 36 to 43, characterized in that said filter coefficient determining means or said filter parameter determining means performs edge detection on a block constituting the input image, and, when an edge exists, places the visual importance in an edge interface, and determines the filter coefficient or the filter parameter.

47. A video signal coding apparatus according to any one of claims 36 to 46, characterized in that said motion vector detecting means performs same motion vector detection on the input image to produce a difference image, and a motion vector corresponding to a picture type of the input image.

48. A video signal coding apparatus according to any one of claims 36 to 46, characterized in that said motion vector detecting means performs motion vector detection on the input image by bidirectional interframe prediction to produce a difference image, and a motion vector corresponding to a picture type of the input image.

49. A video signal coding apparatus characterized in that said apparatus comprises:

difference image producing means for performing motion vector detection in the unit of block on an input image, to produce its motion vector, block type information indicative of information of the block coding, and a first difference image;

filter parameter calculating means for calculating visual importance in a block in the unit of block, from the input image, the block type information, and the first difference image, and calculating a filter parameter for controlling a degree of filtering in the unit of pixel, from the visual importance;

filter coefficient determining means for determining a filter coefficient from a plurality of filter coefficient candidates, based on the filter parameter;

filter calculating means for performing a filter calculation on the input image by using the filter coefficient to produce a filter image;

motion compensating means for performing motion compensation on the filter image by using the motion vector and the block type information, to produce a second difference image; and

coding means for performing coding on the second difference image to produce a coded data.

50. A program recording medium characterized in that a program for realizing all or a part of means of the video signal coding apparatus according to any one of claims 2 to 3, 6 to 10, 12 to 14, 17 to 21, 27 to 31, and 34 to 49 by a computer is stored in said medium.

Fig. 1

# Fig. 2

first bit stream

DC components    AC components    first additional information

first VLD

DPCM    second VLC    second additional information

second bit stream

# Fig. 3

EP 1 033 883 A1

# Fig. 4

first bit stream

```
        ┌──────────────┐   ┌──────────────┐
        │     DPCM     │   │  first VLD   │
        │   decoding   │   │              │
        └──────────────┘   └──────────────┘
                                  │
DC components            AC components    first additional
                                          information
                           ┌──────────────┐   ┌──────────────────────┐
                           │  second VLC  │   │  second additional   │
                           │              │   │    information       │
                           └──────────────┘   └──────────────────────┘
                                  │
        └──────►second bit stream ◄──────┘
```

# Fig. 5

input terminal
501

502 orthogonal transformer

503 quantizer

504 variable length coder

508 bit stream producer

505 quantization estimator

506 additional information amount estimator

507 DC component code amount estimator

EP 1 033 883 A1

Fig. 6

input terminal
501

502

503

504

508

orthogonal transformer

quantizer

variable length coder

bit stream producer

505

DC component code amount estimator

quantization estimator

507

additional information amount estimator

506

EP 1 033 883 A1

## Fig. 7

701 input terminal

702 orthogonal transformer

703 quantizer

704 first variable length coder

705 first variable length decoder

706 second variable length coder

707 quantization estimator

708 additional information amount estimator

709 DC component code amount estimator

706 second variable length coder

EP 1 033 883 A1

# Fig. 8

EP 1 033 883 A1

# Fig. 9

Fig. 10

input terminal
2001

2002 orthogonal transformer

2003 quantizer

2004 variable length coder

2008 bit stream producer

2005 quantization estimator

2007 DC component code amount estimator

2006 additional information amount estimator

# Fig. 11

ideal code amount

second system
code amount

code amount

time

# Fig. 12

input terminal
2201

orthogonal transformer `2202`

quantizer `2203`

variable length coder `2204`

bit stream producer `2208`

quantization estimator `2205`

first detector `2206`

second detector `2207`

EP 1 033 883 A1

Fig. 13

Fig. 14

EP 1 033 883 A1

# Fig. 15

Fig. 16

produce filter parameter
from visual importance

# Fig. 17

|  | tP = 0.0 | 0.0 < tP < 0.5 | 0.5 ≦ tP < 1.0 | tP = 1.0 |
|---|---|---|---|---|
| filter coefficient | filter coefficient 1 $\begin{pmatrix} 1, 2, 1 \\ 2, 4, 2 \\ 1, 2, 1 \end{pmatrix}$ | filter coefficient 2 $\begin{pmatrix} 1, & 4, \\ 4, 16, 4 \\ 1, & 4, \end{pmatrix}$ | filter coefficient 3 $\begin{pmatrix} 1, & 8, \\ 8, 64, 8 \\ 1, & 8, \end{pmatrix}$ | filter coefficient 4 $\begin{pmatrix} 0, 0, 0 \\ 0, 1, 0 \\ 0, 0, 0 \end{pmatrix}$ |

EP 1 033 883 A1

Fig. 18

produce filter parameter by
surface interpolation using
visual importance

# Fig. 19

produce filter parameter by
surface interpolation using
visual importance

# Fig. 20

Fig. 21 (a)

Fig. 21 (b)

Fig. 21 (c)

Fig. 21 (d)

# Fig. 22 (a)

noted block

motion
vector

# Fig. 22 (b)

noted block

motion vector

EP 1 033 883 A1

INTERNATIONAL SEARCH REPORT

| | International application No. |
|---|---|
| | PCT/JP99/05101 |

**A. CLASSIFICATION OF SUBJECT MATTER**
Int.Cl⁷ H04N7/30

According to International Patent Classification (IPC) or to both national classification and IPC

**B. FIELDS SEARCHED**

Minimum documentation searched (classification system followed by classification symbols)
Int.Cl⁷ H04N 7/24-7/68, H04N 1/41-1/419, H04N 5/91-5/956

Documentation searched other than minimum documentation to the extent that such documents are included in the fields searched

| Jitsuyo Shinan Koho | 1922-1996 | Toroku Jitsuyo Shinan Koho | 1994-1999 |
| Kokai Jitsuyo Shinan Koho | 1971-1999 | Jitsuyo Shinan Toroku Koho | 1996-1999 |

Electronic data base consulted during the international search (name of data base and, where practicable, search terms used)
JICST (JOIS)

**C. DOCUMENTS CONSIDERED TO BE RELEVANT**

| Category* | Citation of document, with indication, where appropriate, of the relevant passages | Relevant to claim No. |
|---|---|---|
| A | EP, 634876, A1 (PHILIPS ELECTRONICS N.V.), 18 January, 1995 (18.01.95), Full text & US, 5646692, A & JP, 7-59058, A | 1-35,50 |
| EA | JP, 11-112973, A (Matsushita Electric Industrial Co., Ltd.), 23 April, 1999 (23.04.99), Full text & EP, 907287, A2 | 1-35,50 |
| A | US, 5410352, A (Casio Computer Co., Ltd.), 25 April, 1995 (25.04.95), Full text & JP, 5-252403, A | 1-35,50 |
| X | EP, 603878, A2 (MITSUBISHI DENNKI KABUSHIKI KAISYA), 29 June, 1994 (29.06.94), Claims 1-10, 19-28 & JP, 6-311506, A & US, 5443848, A & US, 5579051, A & US, 5724098, A | 36-45,49,50 |

☒ Further documents are listed in the continuation of Box C.  ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 15 December, 1999 (15.12.99) | 28 December, 1999 (28.12.99) |

| Name and mailing address of the ISA/ Japanese Patent Office | Authorized officer |
|---|---|
| Facsimile No. | Telephone No. |

Form PCT/ISA/210 (second sheet) (July 1992)